(19) Europäisches Patentamt
European Patent Office
Office européen des brevets

(11) EP 0 578 470 B1

(12) EUROPEAN PATENT SPECIFICATION

(45) Date of publication and mention of the grant of the patent:
**07.10.1998 Bulletin 1998/41**

(51) Int Cl.[6]: **C08F 4/646**, C08F 4/658, C08F 10/00

(21) Application number: **93305271.4**

(22) Date of filing: **06.07.1993**

# (54) Process for preparing polyolefins

Verfahren zur Herstellung von Polyolefinen

Procédé de préparation de polyoléfines

(84) Designated Contracting States:
**DE FR GB NL**

(30) Priority: **06.07.1992 JP 200152/92**

(43) Date of publication of application:
**12.01.1994 Bulletin 1994/02**

(73) Proprietor: **NIPPON OIL CO. LTD.**
**Minato-ku Tokyo (JP)**

(72) Inventors:
- **Sano, Akira**
  **Ohta-ku, Tokyo (JP)**
- **Shimizu, Hiroyuki**
  **Shinagawa-ku, Tokyo (JP)**
- **Matsuura, Kazuo**
  **Totsuka-ku, Yokohama-shi, Kanagawa-ken (JP)**

(74) Representative: **Smaggasgale, Gillian Helen et al**
**Mathys & Squire,**
**100 Gray's Inn Road**
**London WC1X 8AL (GB)**

(56) References cited:
**EP-A- 0 376 084**
**EP-A- 0 439 622**
**EP-A- 0 447 079**
**FR-A- 2 516 520**
**US-A- 4 831 091**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 578 470 B1

Printed by Jouve, 75001 PARIS (FR)

## Description

BACKGROUND OF THE INVENTION

The present invention relates to a process for preparing novel polyolefins. More particularly, the present invention is concerned with a process for preparing polyolefins of good particles having a large average particle diameter and a narrow molecular weight distribution, which process is capable of greatly increasing the polymer yield per solid and that per transition metal, thereby permitting the omission of the step of removing catalyst remaining in the resulting polymer, further capable of increasing the bulk density of the polymer and decreasing a fine particulate portion of the polymer.

Heretofore, in this technical field there have been known many catalysts comprising inorganic magnesium solids as carriers such as magnesium halide, magnesium oxide and magnesium hydroxide and a transition metal compound such as a titanium compound or a vanadium compound supported on the carriers. However, the polyolefins obtained in the prior art are generally low in bulk density, relatively small in average particle diameter and generally wide in particle size distribution so contain a large proportion of fine particles. Besides, when these powdery polymers are subjected to forming, there arise problems such as dusting and lowering of the forming, efficiency. For this reason, improvement has keenly been desired from the standpoint of productivity and polymer handling. Further, still further improvements are considered necessary in order to satisfy the recent keen desire for omitting the pelletizing step and using a powdery polymer directly in a processing machine.

The present inventors have previously found out novel catalyst components with the above drawbacks remedied and already filed patent applications thereon (see JP1-11651 B, 1-12289B, 60-149605A, 62-32105A and 62-207306A). The use of these catalysts components can afford a polymer having a high bulk density and a large average particle diameter. However, a further improvement has been considered necessary for omitting the pelletizing step and using a powdery polymer directly in a processing machine.

Also, there are various fields in which a polyolefin having a narrow molecular weight distribution is required. For example, an injection-grade polyolefin requires a narrow molecular weight to improve the impact strength and a film-grade polyolefin to improve the strength, transparency, anti-blocking property and heat-sealability.

The present inventors have also found out catalyst components having such properties and filed patent applications (see JP3-64306A, 3-153707A, 3-185004A, 3-252407A and 2-179485A). These catalyst components can each afford a polymer having a narrow molecular weight distribution but a further improvement has still been required.

US-A-4831091 discloses a catalyst composition which consists of a solid product prepared by mixing and dissolving a magnesium dihalide, an orthotitanic acid ester and saturated alcohol in an inert hydrocarbon solvent, subjecting the resulting component to a mixing reaction with a component consisting of an aromatic monocarboxylic acid ester, an aluminum compound and a homogenated silicon to deposit a solid product which is then reacted with titanium terachloride to obtain a solid product which is washed in a hydrocarbon solvent. This solid product is used together with an organoaluminum compound and an organic silicon compound having a Si-O-C bonding.

FR-A-2516520 discloses a catalyst composition comprising a solid titanium compound containing magnesium, titanium, a halogen and an ester which is used together with an organic silicon compound containing an Si-O-C or an Si-N-C bond.

It is the object of the present invention to remedy the above-mentioned drawbacks and obtain in extremely high activity a polymer having a high bulk density, a narrow particle size distribution, an extremely low proportion of fine particles, and superior fluidity.

**SUMMARY OF THE INVENTION**

The present invention resides in a process for preparing a polyolefin by polymeriing or copolymerizing an olefin or olefins in the presence of a catalyst comprising the following [I], [II], and [III]:

[I] a solid catalyst component prepared by reacting the reaction product prepared by reacting the following components (1), (2) and (3) in the presence of a compound represented by the general formula $R^3OH$ wherein $R^3$ represents a hydrocarbon group having 6-20 carbon atoms which may contains a hetero atom such as oxygen, nitrogen, sulfur or chlorine with the following component (4):

(1) a silicon oxide and/or an aluminum oxide;

(2) a reaction product obtained by the reaction of a magnesium halide and a compound represented by the general formula $Me(OR^1)_nX_{z-n}$ wherein Me represents an element of Groups I to IV in the Periodic Table, z represents the valence of the element Me, n is $0 < n \leqq z$, X is a halogen atom, and $R^1$ is a hydrocarbon group having 1 to 20 carbon atoms;

(3) a titanium compound represented by the general formula $Ti(OR^2)_mX_{4-m}$ wherein $R^2$ is a hydrocarbon group having 1 to 20 carbon atoms, X is a halogen atom, and m is $0 \leqq m \leqq 4$; and
(4) an organoaluminum compound represented by the general formula $Al(OR^4)_pR^5_qX_{3-(p+q)}$ wherein $R^4$ and $R^5$ are each a hydrocarbon group having 1-24 carbon atoms and may be same or different, X is a halogen atom or hydrogen atom and p and q are $0 \leqq p < 3$, $0 \leqq q < 3$, provided that $0 < p+q < 3$;

[II] a silicon compound having at least one bonding selected from Si-N-C and Si-O-C; and
[III] an organometallic compound.

By the process of the present invention there is obtained, in extremely high activity, a polyolefin having a relatively large average particle diameter, a narrow particle size distribution and a reduced proportion of fine particles. Besides, the bulk density and free fluidity of the polyolefin are high. These characteristics are very advantageous to the polymerization operation. Further, the polyolefin prepared by the process of the present invention can be subjected to forming not only as pellets but also in the form of powder, without causing any trouble.

It is also a characteristic feature of the present invention that the polymer obtained using the catalyst specified in the present invention is extremely narrow in its molecular weight distribution and small in the amount thereof extracted in hexane, and that the amount of low grade polymers by-produced is very small. Therefore, when film is formed using the polyolefin of a narrow molecular weight distribution prepared by the process of the present invention, it has a lot of merits, for example, high transparency, superior anti-blocking property and heatsealability.

## DETAILED DESCRIPTION OF THE INVENTION

The present invention will be described concretely hereinunder.

The catalyst used in the polyolefin preparing process of the present invention comprises the following components [I], [II] and [III]:

[I] a solid catalyst component prepared by reacting the reaction product prepared by reacting the following components (1), (2) and (3) in the presence of a compound represented by the general formula $R^3OH$ with the following component (4):

(1) a silicon oxide and/or an aluminum oxide (Component [I]-(1));
(2) a reaction product obtained by the reaction of a magnesium halide and a compound represented by the general formula $Me(OR^1)_nX_{z-n}$ (Component [I]-(2));
(3) a titanium compound represented by the general formula $Ti(OR^2)_mX_{4-m}$ (Component [I]-(3)); and
(4) an organoaluminum compound represented by the general formula $Al(OR^4)_pR^5_qX_{3-(p+q)}$ (Component [I]-(4));

[II] a silicon compound having at least one bonding selected from Si-N-C and Si-O-C; and
[III] an organometallic compound.

1. Solid Catalyst Component (Component [I])

(1) The silicon oxide used in the present invention is silica or a double oxide of silicon and at least one another metal selected from Groups I-VIII of the Periodic Table.

The aluminum oxide used in the present invention is alumina or a double oxide of aluminum and at least one another metal selected from Groups I-VIII in the Periodic Table.

As typical examples of the double oxide of silicon or aluminum and at least one another metal selected from Groups I-VIII in the periodic Table there are mentioned various natural and synthetic double oxides such as $Al_2O_3.MgO$, $Al_2O_3.CaO$, $Al_2O_3.SiO_2$, $Al_2O_3.MgO.CaO$, $Al_2O_3.MgO.SiO_2$, $Al_2O_3.CuO$, $Al_2O_3.Fe_2O_3$, $Al_2O_3.NiO$, and $SiO_2.MgO$. It is to be noted that these formulae are not molecular formulae but represent only compositions and that the structure and component ratio of the double oxide used in the present invention are not specially limited thereby. It goes without saying that the silicon oxide and/or aluminum oxide used in the present invention may have a small amount of water absorbed therein or may contain a small amount of impurities.

Although the properties of the silicon oxide and/or aluminum oxide used in the present invention are not specially limited so far as the objects of the present invention are not adversely affected thereby, a silica having a particle diameter of 1 to 200 µm, an average pore volume of greater than 0.3 ml/g and a surface area of greater than 50 $m^2/g$ is preferred. Also, it is preferably calcined at 200 - 800°C by a conventional method prior to use.

(2) As the magnesium halide there is used a substantially anhydrous one. Examples are magnesium dihalides

such as magnesium fluoride, magnesium chloride, magnesium bromide, and magnesium iodide, with magnesium chloride being particularly preferred.

These magnesium halides may have been treated with electron donors such as alcohols, esters, ketones, carboxylic acids, ethers, amines, and phosphines.

As examples of the compound of the general formula $Me(OR^1)_nX_{Z-n}$ used in the present invention wherein Me is preferably an element of Groups I to III or IV b in the Periodic Table, and $R^1$ is preferably alkyl, aryl, or aralkyl having 1-8 carbon atoms, there are mentioned compounds represented by $NaOR^1$ , $Mg(OR^1)_2$, $Mg(OR^1)X$, $Ca(OR^1)_2$, $Zn(OR^1)_2$, $Cd(OR^1)_2$, $B(OR^1)_3$, $Al(OR^1)_3$, $Al(OR^1)_2$,X,$Al(OR^1)X_2$, $Si(OR^1)_4$, $Si(OR^1)_3X$, $Si(OR^1)_2X_2$, $Si(OR^1)X_3$, and $Sn(OR^1)_4$. More concrete and preferred examples are $Mg(OC_2H_5)_2$, $Mg(OC_2H_5)Cl$, $Al(OCH_3)_3$, $Al(OC_2H_5)_3$, $Al(On\text{-}C_3H_7)_3$, $A(Oi\text{-}C_3H_7)_3$, $Al(On\text{-}C_4H_9)_3$, $Al(Osec\text{-}C_4H_9)_3$, $Al(Ot\text{-}C_4H_9)_3$, $Al(OCH_3)_2Cl$, $Al(OC_2H_5)_2Cl$, $Al(OC_2H_5)Cl_2$, $Al(Oi\text{-}C_3H_7)_2Cl$, $Al(Oi\text{-}C_3H_7)Cl_2$, $Al(OC_6H_5)_3$, $Al(OC_6H_5)_2Cl$, $Al(OC_6H_5)Cl_2$, $Al(OC_6H_4CH_3)_3$, $Al(OC_6H_4CH_3)_2Cl$, $Al(OC_6H_4CH_3)Cl_2$, $Al(OCH_2C_6H_5)_3$, $Si(OC_2H_5)_4$, $Si(OC_2H_5)_3Cl$, $Si(OC_2H_5)_2Cl_2$, $Si(OC_2H_5)Cl_3$, $Si(OC_6H_5)_4$, $Si(OC_6H_5)_3Cl$, $Si(OC_6H_5)_2Cl_2$, $Si(OC_6H_5)Cl_3$, $Si(OCH_2C_6H_5)_4$. It is preferable that the reaction ratio of the compound of the general formula $Me(OR^1)_nX_{z-n}$ to the magnesium halide is in the range of 0.01 to 10, preferably 0.1 to 5 in terms of Me/Mg (molar ratio).

The method of reaction between the magnesium halide and the compound of the general formula $Me(OR^1)\ _nX_{z-n}$ is not specially limited. There may be adopted a method in which both components are copulverized using, for example, ball mill, vibration mill, rod mill, or impact mill, at a temperature of 0° to 200°C , for 30 minutes to 50 hours, in the presence or absence of an inert hydrocarbon solvent. Or there may be adopted a method in which both components are mixed and reacted together under heating at a temperature of 20° to 400°C, preferably 50° to 300°C, for 5 minutes to 10 hours, in an organic solvent selected from inert hydrocarbons, alcohols, phenols, ethers, ketones, esters, nitriles and mixtures thereof, and thereafter the solvent is evaporated off. The method of co-pulverizing the two is preferred in the present invention.

(3) As example of the titanium compound of the general formula $Ti(OR^2)_mX_{4-m}$ used in the present invention wherein R is a hydrocarbon group having 1 to 20, preferably 1 to 12, carbon atoms such as an alkyl, aryl or aralkyl group, X is a halogen atom such as chlorine, bromine, iodine or fluorine, and m is $0 \leqq m \leqq 4$. As the above alkyl, there are mentioned methyl, ethyl, propyl, isopropyl, butyl, sec-butyl, tert-butyl, pentyl, octyl or decyl, as the aryl there are mentioned phenyl or tolyl and as the aralkyl there are mentioned benzyl. Examples are titanium tetrahalides (e.g. titanium tetrachloride, titanium tetrabromide, titanium tetraiodide), monomethoxytrichlorotitanium, dimethoxydichlorotitanium, trimethoxymonochlorotitanium, monoethoxytrichlorotitanium, monoethoxytrifluorotitanium, monomethoxytrichlorotitanium, diethoxydifluorotitanium, diethoxydichlorotitanium, diethoxydibromotitanium, triethoxyfluorotitanium, triethoxychlorotitanium, tetraethoxytitanium, monopropoxytrichlorotitanium, dipropoxydichlorotitanium, diisopropoxydichlorotitanium, diisopropoxydibromotitanium, tripropoxyfluorotitanium, tripropoxychlorotitanium, tetra-n-propoxytitanium, tetraisopropoxytitanium, monobutoxytrichlorotitanium, monoisobutoxytrichlorotitanium, dibutoxydichlorotitanium, diisopropoxydichlorotitanium, tributoxyfluorotitanium, tributoxychlorotitanium, triisobutoxychlorotitanium, tetra-n-butoxytitanium, tetra-isobutoxytitanium, tetra-sec-butoxytitanium, tetra-tert-butoxytitanium, monopentoxytrichlorotitanium, dipentoxydichlorotitanium, tripentoxymonochlorotitanium, tetra-n-pentyloxytitanium, tetracyclopentyloxy-titanium, monooctyloxytrichlorotitanium, dioctyloxydichlorotitanium, trioctyloxymonochlorotitanium, tetra-n-hexyloxytitanium, tetracyclohexyloxytitanium, tetra-n-heptyloxytitanium, tetra-n-octyloxytitanium, tetra-2-ethylhexyloxytitanium, mono-2-ethylhexyloxytrichlorotitanium, di-2-ethylhexyloxydichlorotitanium, tri-2-ethylhexyloxymonochlorotitanium, tetranonyloxytitanium, tetra-decyloxytitanium, tetraisobornyloxytitanium, tetra-oleyloxytitanium, tetraallyloxytitanium, tetrabenzyloxy-titanium, tetrabenzhydryloxytitanium, monophenoxytrichlorotitanium, diphenoxydichlorotitanium, triphenoxychlorotitanium, tri-o-xylenoxychlorotitanium, tetraphenoxy-titanium, tetra-o-methylphenoxytitanium, tetra-m-methylphenoxytitanium, tetra-1-naphthyloxytitanium and tetra-2-naphthyloxytitanium, and mixtures thereof. Preferable titanium compounds are $Ti(OR^2)_mX_{4-m}$ ($0 \leqq m < 4$) such as titanium tetrachloride, mono ethoxytrichlorotitanium, diethoxydichlorotitanium, monobutoxytrichlorotitanium and dibutoxydichlorotitanium and $Ti(OR^2)_4$ such as tetraethoxytitanium, tetraisopropoxytitanium, tetra-n-butoxy- titanium, tetra-n-hexyloxytitanium, tetra-n-octyloxy-titanium and tetra-2-ethylhexyloxytitanium.

Compounds of the general formula $R^3OH$ are those wherein $R^3$ is a hydrocarbon group having 6 to 20, preferably 6 to 12, carbon atoms, or an organic residue containing such an element as oxygen, nitrogen, sulfur, or chlorine. Preferred examples of such hydrocarbon radical are alkyl, alkenyl, aryl and aralkyl. Particularly preferred are those having a branch structure. As example of the compound of the general formula ROH there are mentioned 1-hexanol, 2-methyl-1-pentanol, 4-methyl-1-pentanol, 4-methyl-2-pentanol, 2-ethyl-1-butanol, 1-heptanol, 2-pentanol, 3-heptanol, 4-heptanol, 2,4-dimethyl-3-pentanol, 1-octanol, 2-octanol, 2-ethyl-1-hexanol, 3,5-dimethyl-1-hexanol, 2,2,4-trimethyl-1-pentanol, 1-nonanol, 5-nonanol, 3,5-dimethyl-4-heptanol, 2,6-dimethyl-4-heptanol, 3,5,5-trimethyl-1-hexanol, 1-decanol, 1-undecanol, 1-dodecanol, 2,6,8-trimethyl-4-nonanol, 1-tridecanol, 1-pentadecanol, 1-hexadecanol, 1-heptadecanol, 1-octadecanol, 1-nonadecanol, 1-eicosanol, phenol, chlorophenol, benzyl alcohol, methyl cellosolve, and mixtures thereof. Particularly, 2-methyl-1-pentanol, 4-methyl-1-pentanol, 4-methyl-2-pentanol, 2-ethyl-1-butanol, 2,4-dimethyl-3-pentanol, 2-ethyl-1-hexanol, 3,5-dimethyl-1-hexanol, 2,2,4-trimethyl-1-pentanol, 3,5-dimethyl-4-heptanol, 2,6-dimethyl-4-heptanol and 3,5,5-trimethyl-1-hexanol are preferred.

(4) Organoaluminum compounds represented by the general formula $Al(OR^4)_pR^5_qX_{3-(p+q)}$ wherein $R^4$ and $R^5$ are each a hydrocarbon group having 1-24, preferably 1-12, carbon atoms, preferably alkyl, aryl or aralkyl and $R^4$ and $R^5$ may be same or different, X is hydrogen atom or halogen atom such as chlorine, bromine, fluorine or iodine and p and q $0 \leqq p < 3$, $0 \leqq q < 3$, provided that $0 < p+q < 3$. As the above alkyl these are mentioned methyl, ethyl, propyl, isopropyl, butyl, sec-butyl, tert-butyl, pentyl, octyl and decyl, as the aryl these are mentioned phenyl and tolyl and as the aralkyl these are mentioned benzyl. Examples of the organoaluminum compounds are dimethylaluminum-methoxide, dimethylaluminumethoxide, dimethylaluminumisopropoxide, dimethylaluminum-tert-butoxide, dimethylaluminum-n-butoxide, dimethylaluminum-sec-butoxide , diethylaluminummethoxide, diethylaluminumethoxide, diethylaluminumisopropoxide, diethylaluminum-tert-butoxide , diethylaluminum-n-butoxide, diethylaluminum-sec-butoxide, dipropylaluminum-propoxide, dipropylaluminum-tert-butoxide, dibutylaluminum-tert-butoxide, di-iso-butylaluminummethoxide, di-iso-butylaluminumethoxide, di-iso-butylaluminumisopropoxide, di-iso-butylaluminum-iso-butoxide, di-iso-butylaluminum-tert-butoxide, di-tert-butylaluminummethoxide, di-tert-butylaluminumethoxide, di-tert-butylaluminum-tert-butoxide, dimethylaluminumphenoxide, di-n-hexylaluminumethoxide, di-n-hexylaluminumethoxide, di-n-hexylaluminumisopropoxide, ethylethoxyaluminumchloride, isobutylethoxyaluminumchloride, ethylphenoxyaluminumchloride, phenylethoxyaluminumchloride, ethylethoxyaluminumhydride, ethylmethoxyaluminumchloride, ethylisopropoxyaluminumdichloride, ethylbutoxyaluminumchloride, phenylaluminumdichloride, diphenylaluminumchloride, benzylaluminumdichloride, dibenzylaluminumchloride, dimethylaluminumchloride, diethylaluminumfluoride, diethylaluminumchloride, diethylaluminumbromide, diethylaluminumidodide, di-iso-butylaluminumchloride, methylaluminumsesquichloride, ethylaluminumsesquichloride, ethylaluminumsesquibromide, methylaluminumdichloride, ethylaluminumdichloride, isobutylaluminumdichloride, trimethylaluminum, triethylaluminum, tri-n-propylaluminum, tri-n-butylaluminum, triisobutylaluminum, tri-n-hexylaluminum, tri-n-octylaluminum, or mixtures thereof. Preferable compounds are those represented by the general formula $AlR^5_nX_{3-n}$ such as diethylaluminumchloride, ethylaluminumsesquichloride and ethylaluminum dichloride.

(5) The catalyst component used in the present invention is prepared by reacting the reaction product of the components [I]-(1) to [I]-(3) with the component [I]-(4).

How to react the components [I]-(1) to [I]-(3) in the preparation of component [I] is not specially limited provided the reaction is conducted in the presence of a compound of the general formula $R^3OH$. These components may be reacted with one another in any of the following orders:

(A) Components [I]-(1) to [I]-(3) are contacted together.

(B) Components [I]-(1) and [I]-(2) are contacted together, followed by contact with component [I]-(3).

(C) Components [I]-(1) and [I]-(3) are contacted together, followed by contact with component [I]-(2).

(D) Components [I]-(2) and [I]-(3) are contacted together, followed by contact with component [I]-(1). The above method (D) is preferred. More preferably, components [I]-(2) and [I]-(3) are dissolved and contacted together in advance, using a compound of the general formula $R^3OH$ as a solvent, followed by contact with component [I]-(1). In what order the components [I]-(2) and [I]-(3) should be dissolved in the compound of the general formula $R^3OH$ is not specially limited. Both may be dissolved together, or one may precede the other.

There also may be adopted the following method. Component [I]-(2) and/or component [I]-(3) are (is) dissolved beforehand in a compound smaller in the number of carbon atom than the compound of the general formula $R^3OH$, namely a compound having 1 to 5 carbon atoms, which is a so-called lower alcohol, and thereafter the components to be reacted are contacted together using the lower alcohol solution containing the component [I]-(2) and/or the component [I]-(3) and in the presence of the compound of the general formula $R^8OH$. As the lower alcohol it is desirable to use an alcohol having an alkyl group of $C_1$, to $C_5$. Examples are methanol, ethanol, 1-propanol, 2-propanol, 1-butanol, 2-butanol, 2-methyl-1-propanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol. Of course, various denatured alcohols available commercially as industrial alcohols such as methanol-denatured ethanol and hexane-denatured ethanol are also employable.

According to a preferred method of contacting the components [I]-(1) to [I]-(3), these components are contacted, mixed and reacted in accordance with any of the foregoing contacting orders at a temperature of 20-300°C, preferably 30-150°C, for 1 minute to 48 hours, preferably 30 minutes to 5 hours, in the presence of a compound of the general formula $R^3OH$, and thereafter the compound of the general formula $R^3OH$ is removed by the reduction of pressure and/or heating.

As to the reaction ratio of the components, it is desirable to react the components [I]-(1) and [I]-(2) in such a manner that the magnesium content in the component [I]-(2) becomes 0.01 to 20 mmol, preferably 0.1 to 10 mmol, more

preferably 0.2 to 4.0 mmol, per gram of the component [I]-(1). As to the components [I]-(1) and [I]-(3), it is preferable that the reaction be carried out using 0.01-10.0 mmol, preferably 0.1-5.0 mmol, more preferably 0.2-2.0 mmol, of component [I]-(3) per gram of component [I]-(1), although this ratio differs depending on whether the component [I]-(1) is subjected to a calcining treatment or not or conditions for the calcining treatment if applied.

As to the amount of the compound of the general formula $R^3OH$ to be used, it is desirable to use this compound in an amount of 0.1 to 50 g, preferably 1 to 30 g, per gram of component [I]-(2).

How to contact the reaction product of components [I]-(1), [I]-(2) and [I]-(3) with component [I]-(4) is not specially limited. Preferably, they are reacted in the presence or absence of an inert hydrocarbon solvent inert to a conventional Ziegler catalyst, such as pentane, hexane, cyclohexane, heptane, octane, nonane, decane, benzene, toluene and xylene, at a temperature of 0-300°C, preferably 20-150°C for 5 minutes to 10 hours, followed by evaporation of the solvent.

As to the reaction ratio of the reaction product of components [I]-(1) to [I]-(3) and component [I]-(4), it is preferable that component [I]-(4)/component [I]-(3) (molar ratio) being 0.01-100, preferably 0.2-10, more preferably 0.5-5.

The reaction operation for preparing the solid catalyst component should be performed in an inert gas atmosphere and moisture should be avoided.

2. Silicon Compound (Component [II])

The silicon compound used in the present invention is a silicon compound having at least one Si-O-C bonding and/or a silicon compound having at least one Si-N-C bonding.

As the silicon compound having at least one Si-O-C bonding there are mentioned a silicon compound represented by the general formula $R^5{}_a R^6{}_b R^7{}_c Si(OR^8)_d X_{4-(a+b+c+d)}$ wherein $R^5$, $R^6$ and $R^7$ are each hydrogen or a hydrocarbon group having 1-20, preferably 1-12, carbon atoms, such as alkyl, aryl and aralkyl, $R^8$ is a hydrocarbon group having 1-20, preferably 1-12, carbon atoms, such as alkyl, aryl and aralkyl, $R^5$, $R^6$ and $R^7$ may be same or different and when $R^5$, $R^6$ and $R^7$ are hydrocarbon groups, $R^5$, $R^6$, $R^7$ and $R^8$ may be same or different, X is a halogen atom such as chlorine, bromine and iodine, a, b, c and d are $0 \leqq a < 4$, $0 \leqq b < 4$, $0 \leqq c < 4$ and $0 < d \leqq 4$, provided that $0 < a+b+c+d \leqq 4$. Examples of these silicon compounds are various compounds represented by $Si(OR^8)_4$, $Si(OR^8)_3X$, $Si(OR^8)_2X_2$, $Si(OR^8)X_3$, $R^5Si(OR^8)_3$, $R^5Si(OR^8)_2X$, $R^5Si(OR^8)X_2$, $R^5R^6Si(OR^8)_2$, $R^5R^6Si(OR^8)X$ and $R^5R^6R^7Si(OR^8)$.

Concrete examples are $Si(OCH_3)_4$, $Si(OC_2H_5)_4$, $Si(Oi\text{-}C_3H_7)_4$, $Si(On\text{-}C_4H_9)_4$, $Si(Osec\text{-}C_4H_9)_4$, $Si(OCH_3)_3Cl$, $Si(OC_2H_5)_3Cl$, $Si(Oi\text{-}C_3H_7)_3Cl$, $Si(On\text{-}C_4H_9)_3Cl$, $Si(Osec\text{-}C_4H_9)_3Cl$, $Si(OCH_3)_2Cl_2$, $Si(OC_2H_5)_2Cl_2$, $Si(Oi\text{-}C_3H_7)_2Cl_2$, $Si(On\text{-}C_4H_9)_2Cl_2$, $Si(OC_8H_{17})_2Cl_2$, $Si(OCH_3)Cl_3$, $Si(OC_2H_5)Cl_3$, $Si(Oi\text{-}C_3H_7)Cl_3$, $Si(On\text{-}C_4H_9)Cl_3$, $Si(OC_5H_{11})Cl_3$, $Si(OC_8H_{17})Cl_3$, $Si(OC_{18}H_{37})Cl_3$, $Si(OC_6H_5)Cl_3$, $Si(Op\text{-}CH_3C_6H_5)Cl_3$, $HSi(OCH_3)_3$, $HSi(OC_2H_5)_3$, $HSi(Oi\text{-}C_3H_7)_3$, $CH_3Si(OCH_3)_3$, $CH_3Si(OC_2H_5)_3$, $CH_3Si(Oi\text{-}C_3H_7)_3$, $C_2H_5Si(OCH_3)_3$, $C_2H_5Si(OC_2H_5)_3$, $C_2H_5Si(Oi\text{-}C_3H_7)_3$, $i\text{-}C_3H_7Si(OCH_3)_3$, $i\text{-}C_3H_7Si(OC_2H_5)_3$, $i\text{-}C_3H_7Si(Oi\text{-}C_3H_7)_3$, $n\text{-}C_3H_7Si(OCH_3)_3$, $n\text{-}C_3H_7Si(OC_2H_5)_3$, $n\text{-}C_3H_7Si(Oi\text{-}C_3H_7)_3$, $n\text{-}C_4H_9Si(OCH_3)_3$, $n\text{-}C_4H_9Si(OC_2H_5)_3$, $i\text{-}C_4H_9Si(OCH_3)_3$, $i\text{-}C_4H_9Si(OC_2H_5)_3$, $t\text{-}C_4H_9Si(OCH_3)_3$, $t\text{-}C_4H_9Si(OC_2H_5)_3$, $(PH)Si(OCH_3)_3$, $(PH)Si(OC_2H_5)_3$, $(CyH)Si(OCH_3)_3$, $(CyH)Si(OC_2H_5)_3$, $(NOR)Si(OCH_3)_3$, $(NOR)Si(OC_2H_5)_3$, $CH_3Si(OCH_3)_2Cl$, $CH_3Si(OC_2H_5)_2Cl$, $CH_3Si(Oi\text{-}C_3H_7)_2Cl$, $CH_3Si(OCH_3)_2Br$, $CH_3Si(OC_2H_5)_2Br$, $CH_3Si(Oi\text{-}C_3H_7)_2Br$, $CH_3Si(OCH_3)_2I$, $CH_3Si(OC_2H_5)_2I$, $CH_3Si(Oi\text{-}C_3H_7)_2I$, $C_2H_5Si(OCH_3)_2Cl$, $C_2H_5Si(OC_2H_5)_2Cl$, $C_2H_5Si(Oi\text{-}C_3H_7)_2Cl$, $C_2H_5Si(OCH_3)_2Br$, $C_2H_5Si(OC_2H_5)_2Br$, $C_2H_5Si(Oi\text{-}C_3H_7)_2Br$, $C_2H_5Si(OCH_3)_2I$, $C_2H_5Si(OC_2H_5)_2I$, $C_2H_5Si(Oi\text{-}C_3H_7)_2I$, $n\text{-}C_3H_7Si(OC_2H_5)_3$, $n\text{-}C_3H_7Si(Oi\text{-}C_3H_7)_3$, $i\text{-}C_3H_7Si(OCH_3)_2Cl$, $i\text{-}C_3H_7Si(OC_2H_5)_2Cl$, $i\text{-}C_3H_7Si(Oi\text{-}C_3H_7)_2Cl$, $n\text{-}C_3H_7Si(OCH_3)_2Cl$, $n\text{-}C_3H_7Si(OC_2H_5)_2Cl$, $n\text{-}C_3H_7Si(Oi\text{-}C_3H_7)_2Cl$, $n\text{-}C_4H_9Si(OCH_3)_2Cl$, $n\text{-}C_4H_9Si(OC_2H_5)_2Cl$, $n\text{-}C_4H_9Si(Oi\text{-}C_3H_7)_2Cl$, $i\text{-}C_4H_9Si(OCH_3)_2Cl$, $i\text{-}C_4H_9Si(OC_2H_5)_2Cl$, $i\text{-}C_4H_9Si(Oi\text{-}C_3H_7)_2Cl$, $t\text{-}C_4H_9Si(OCH_3)_2Cl$, $t\text{-}C_4H_9Si(OC_2H_5)_2Cl$, $t\text{-}C_4H_9Si(Oi\text{-}C_3H_7)_2Cl$, $(PH)Si(OCH_3)_2Cl$, $(PH)Si(OC_2H_5)_2Cl$, $(PH)Si(Oi\text{-}C_3H_7)_2Cl$, $(CyH)Si(OCH_3)_2Cl$, $(CyH)Si(OC_2H_5)_2Cl$, $(CyH)Si(Oi\text{-}C_3H_7)_2Cl$, $CH_3Si(OCH_3)Cl_2$, $CH_3Si(OC_2H_5)Cl_2$, $CH_3Si(Oi\text{-}C_3H_7)Cl_2$, $C_2H_5Si(OCH_3)Cl_2$, $C_2H_5Si(OC_2H_5)Cl_2$, $C_2H_5Si(Oi\text{-}C_3H_7)Cl_2$, $i\text{-}C_3H_7Si(OCH_3)Cl_2$, $i\text{-}C_3H_7Si(OC_2H_5)Cl_2$, $n\text{-}C_3H_7Si(OCH_3)Cl_2$, $n\text{-}C_3H_7Si(OC_2H_5)Cl_2$, $n\text{-}C_4H_9Si(OCH_3)Cl_2$, $n\text{-}C_4H_9Si(OC_2H_5)Cl_2$, $i\text{-}C_4H_9Si(OCH_3)Cl_2$, $i\text{-}C_4H_9Si(OC_2H_5)Cl_2$, $t\text{-}C_4H_9Si(OCH_3)Cl_2$, $t\text{-}C_4H_9Si(OC_2H_5)Cl_2$, $(PH)Si(OCH_3)Cl_2$, $(PH)Si(OC_2H_5)Cl_2$, $(CyH)Si(OCH_3)Cl_2$, $(CyH)Si(OC_2H_5)Cl_2$, $(CH_3)HSi(OCH_3)_2$, $(CH_3)HSi(OC_2H_5)_2$, $(C_2H_5)HSi(OCH_3)_2$, $(C_2H_5)HSi(OC_2H_5)_2$, $(i\text{-}C_3H_7)HSi(OCH_3)_2$, $(i\text{-}C_3H_7)HSi(OC_2H_5)_2$, $(i\text{-}C_3H_7)HSi(Oi\text{-}C_3H_7)_2$, $(CH_3)H_2Si(OCH_3)$, $(C_2H_5)H_2Si(OC_2H_5)$, $(CH_3)_2Si(OCH_3)_2$, $(CH_3)_2Si(OC_2H_5)_2$, $(C_2H_5)_2Si(OCH_3)_2$, $(C_2H_5)_2Si(OC_2H_5)_2$, $(i\text{-}C_3H_7)_2Si(OCH_3)_2$, $(i\text{-}C_3H_7)_2Si(OC_2H_5)_2$, $(n\text{-}C_3H_7)_2Si(OCH_3)_2$, $(n\text{-}C_3H_7)_2Si(OC_2H_5)_2$, $(n\text{-}C_4H_9)_2Si(OCH_3)_2$, $(n\text{-}C_4H_9)_2Si(OC_2H_5)_2$, $(i\text{-}C_4H_9)_2Si(OCH_3)_2$, $(i\text{-}C_4H_9)_2Si(OC_2H_5)_2$, $(t\text{-}C_4H_9)_2Si(OCH_3)_2$, $(t\text{-}C_4H_9)_2Si(OC_2H_5)_2$, $(PH)_2Si(OCH_3)_2$, $(PH)_2Si(OC_2H_5)_2$, $(CyH)_2Si(OCH_3)_2$, $(CyH)_2Si(OC_2H_5)_2$, $(NOR)_2Si(OCH_3)_2$, $(NOR)_2Si(OC_2H_5)_2$, $(CH_3)(C_2H_5)Si(OCH_3)_2$, $(CH_3)(C_2H_5)Si(OC_2H_5)_2$, $(CH_3)(i\text{-}C_3H_7)Si(OCH_3)_2$, $(CH_3)(i\text{-}C_3H_7)Si(OC_2H_5)_2$, $(CH_3)(t\text{-}C_4H_9)Si(OCH_3)_2$, $(CH_3)(t\text{-}C_4H_9)Si(OC_2H_5)_2$, $(CH_3)(PH)Si(OCH_3)_2$, $(CH_3)(PH)Si(O_2H_5)_2$, $(CH_3)(CyH)Si(OCH_3)_2$, $(CH_3)(CyH)Si(OC_2H_5)_2$, $(CH_3)(NOR)Si(OCH_3)_2$, $(CH_3)(NOR)Si(OC_2H_5)_2$, $(C_2H_5)(i\text{-}C_3H_7)Si(OCH_3)_2$, $(C_2H_5)(i\text{-}C_3H_7)Si(OC_2H_5)_2$, $(C_2H_5)(t\text{-}C_4H_9)Si(OCH_3)_2$, $(C_2H_5)(t\text{-}C_4H_9)Si(OC_2H_5)_2$, $(C_2H_5)(PH)Si(OCH_3)_2$, $(C_2H_5)(PH)Si(O_2H_5)_2$, $(C_2H_5)(CyH)Si(OCH_3)_2$, $(C_2H_5)(CyH)Si(OC_2H_5)_2$, $(CH_3)_2Si(Oi\text{-}C_3H_7)_2$, $(C_2H_5)_2Si(Oi\text{-}C_3H_7)_2$ $(i\text{-}C_3H_7)_2Si(Oi\text{-}C_3H_7)_2$, $(t\text{-}C_4H_9)_2Si(Oi\text{-}C_3H_7)_2$, $(PH)_2Si(Oi\text{-}C_3H_7)_2$, $(CyH)_2Si(Oi\text{-}C_3H_7)_2$, $(CH_3)_2Si(OCH_3)Cl$, $(CH_3)_2Si$

$(OC_2H_5)Cl$, $(C_2H_5)_2Si(OCH_3)Cl$, $(C_2H_5)_2Si(OC_2H_5)Cl$, $(i\text{-}C_3H_7)_2Si(OCH_3)Cl$, $(i\text{-}C_3H_7)_2Si(OC_2H_5)Cl$, $(t\text{-}C_4H_9)_2Si(OCH_3)Cl$, $(t\text{-}C_4H_9)_2Si(OC_2H_5)Cl$, $(PH)_2Si(OCH_3)Cl$, $(PH)_2Si(OC_2H_5)Cl$, $(CyH)_2Si(OCH_3)Cl$, $(CyH)_2Si(OC_2H_5)Cl$, $(CH_3)(t\text{-}C_4H_9)Si(OCH_3)Cl$, $(CH_3)(t\text{-}C_4H_9)Si(OC_2H_5)Cl$, $(CH_3)(PH)Si(OCH_3)Cl$, $(CH_3)(PH)Si(O_2H_5)Cl$, $(CH_3)(CyH)Si(OCH_3)Cl$, $(CH_3)(CyH)Si(OC_2H_5)Cl$, $(CH_3)_2Si(Oi\text{-}C_3H_7)Cl$, $(C_2H_5)_2Si(Oi\text{-}C_3H_7)Cl$, $(PH)_2Si(Oi\text{-}C_3H_7)Cl$, $(CyH)_2Si(Oi\text{-}C_3H_7)Cl$, $(CH_3)(t\text{-}C_4H_9)Si(Oi\text{-}C_3H_7)Cl$, $(CH_3)(PH)Si(Oi\text{-}C_3H_7)Cl$, $(CH_3)(CyH)Si(Oi\text{-}C_3H_7)Cl$, $(CH_3)_2HSi(OCH_3)$, $(C_2H_5)_2HSi(OCH_3)$, $(CH_3)_3Si(OCH_3)$, $(CH_3)_3Si(OC_2H_5)$, $(C_2H_5)_3Si(OCH_3)$, $(C_2H_5)_3Si(OC_2H_5)$, $(CH_3)_2(t\text{-}C_4H_9)Si(OCH_3)$, $(CH_3)_2(t\text{-}C_4H_9)Si(OC_2H_5)$, $(CH_3)_2(PH)Si(OCH_3)$, $(CH_3)_2(PH)Si(OC_2H_5)$, $(CH_3)_2(CyH)Si(OCH_3)$ and $(CH_3)_2(CyH)Si(OC_2H_5)$ (PH is a benzene ring, CyH is a cyclohexane ring and NOR is a norbornene ring).

As the silicon compound having at least one Si-N-C bonding there are mentioned a silicon compound represented by the general formula $R^5{}_aR^6{}_bR^7{}_cSi(NR^8{}_2)_dX_{4-(a+b+c+d)}$ wherein $R^5$, $R^6$ and $R^7$ are each hydrogen or a hydrocarbon group having 1-20, preferably 1-12, carbon atoms, such as alkyl, aryl and aralkyl, $R^8$ is a hydrocarbon group having 1-20, preferably 1-12, carbon atoms, such as alkyl, aryl and aralkyl, $R^5$, $R^6$ and $R^7$ may be same or different and when $R^5$, $R^6$ and $R^7$ are hydrocarbon groups, $R^5$, $R^6$, $R^7$ and $R^8$ may be same or different, X is a halogen atom such as chlorine, bromine and iodine, a, b, c and d are $0 \leqq a < 4$, $0 \leqq b < 4$, $0 \leqq c < 4$ and $0 < d \leqq 4$, provided that $0 < a+b+c+d \leqq 4$. Examples of these silicon compounds are $Si\{N(CH_3)_2\}_4$, $Si\{N(C_2H_5)_2)\}_4$, $HSi\{N(CH_3)_2\}_3$, $HSi\{N(C_2H_5)_2\}_3$, $CH_3Si\{N(CH_3)_2\}_3$, $CH_3Si\{N(C_2H_5)_2\}_3$, $C_2H_5Si\{N(CH_3)_2\}_3$, $C_2H_5Si\{N(C_2H_5)_2\}_3$, $C_3H_7Si\{N(CH_3)_2\}_3$, $C_3H_7Si\{N(C_2H_5)_2\}_3$, $C_4H_9Si\{N(CH_3)_2\}_3$, $C_4H_9Si\{N(C_2H_5)_2\}_3$, $C_6H_5Si\{N(CH_3)_2\}_3$, $C_6H_5Si\{N(C_2H_5)_2\}_3$, $C_2H_4Si\{N(CH_3)_2\}_3$, $C_2H_4Si\{N(C_2H_5)_2\}_3$, $Si\{NH(CH_3)\}_4$, $Si\{NH(C_2H_5)\}_4$, $HSi\{NH(CH_3)\}_3$, $HSi\{NH(C_2H_5)\}_3$, $CH_3Si\{NH(CH_3)\}_3$, $CH_3Si\{NH(C_2H_5)\}_3$, $C_2H_5Si\{NH(CH_3)\}_3$, $C_2H_5Si\{NH(C_2H_5)\}_3$, $C_3H_7Si\{NH(CH_3)\}_3$, $C_3H_7Si\{NH(C_2H_5)\}_3$, $C_4H_9Si\{NH(CH_3)\}_3$, $C_4H_9Si\{NH(C_2H_5)\}_3$, $C_6H_5Si\{NH(CH_3)\}_3$, $C_6H_5Si\{NH(C_2H_5)\}_3$, $C_2H_4Si\{NH(CH_3)\}_3$, $C_2H_4Si\{NH(C_2H_5)\}_3$, $H_2Si\{N(CH_3)_2\}_2$, $HCH_3Si(N(CH_3)_2\}_2$, $HC_2H_5Si\{N(CH_3)_2\}_2$, $(CH_3)_2Si\{N(CH_3)_2\}_2$, $(CH_3)(C_2H_5)Si\{N(CH_3)_2\}_2$, $(CH_3)(C_2H_4)Si\{N(CH_3)_2\}_2$, $(CH_3)(C_6H_5)Si\{N(CH_3)_2\}_2$, $H_2Si\{N(C_2H_5)_2\}_2$, $HCH_3Si\{N(C_2H_5)_2\}_2$, $HC_2H_5Si\{N(C_2H_5)_2\}_2$, $(CH_3)_2Si\{N(C_2H_5)_2\}_2$, $(CH_3)(C_2H_5)Si\{N(C_2H_5)_2\}_2$, $(CH_3)(C_2H_4)Si\{N(C_2H_5)_2\}_2$, $(CH_3)(C_6H_5)Si\{N(C_2H_5)_2\}_2$, $H_2Si\{NH(CH_3)\}_2$, $HCH_3Si\{NH(CH_3)\}_2$, $HC_2H_5Si\{NH(CH_3)\}_2$, $(CH_3)_2Si\{NH(CH_3)\}_2$, $(CH_3)(C_2H_5)Si\{NH(CH_3)\}_2$, $(CH_3)(C_2H_4)Si\{NH(CH_3)\}_2$, $(CH_3)(C_6H_5)Si\{NH(CH_3)\}_2$, $H_3Si\{NH(C_2H_5)\}_2$, $HCH_3Si\{NH(C_2H_5)\}_2$, $HC_2H_5Si\{NH(C_2H_5)\}_2$, $(CH_3)_2Si\{NH(C_2H_5)\}_2$, $(CH_3)(C_3H_5)si\{NH(C_2H_5)\}_2$, $(CH_3)(C_2H_4)Si\{NH(C_2H_5)\}_2$, $(CH_3)(C_6H_5)Si\{NH(C_2H_5)\}_2$, $H_2SiN(CH_3)_2$, $H_2CH_3SiN(CH_3)_2$, $H_2C_2H_5SiN(CH_3)_2$, $H(CH_3)_2SiN(CH_3)_2$, $H(C_2H_5)_2SiN(CH_3)_2$, $(CH_3)_3SiN(CH_3)_2$, $(CH_3)_2(C_2H_5)siN(CH_3)_2$, $(CH_3)(C_2H_5)_2SiN(CH_3)_2$, $H_3SiN(C_2H_5)_2$, $H_2CH_3SiN(C_2H_5)_2$, $H_2C_2H_5SiN(C_2H_5)_2$, $H(CH_3)_2SiN(C_2H_5)_2$, $H(C_2H_5)_2SiN(C_2H_5)_2$, $(CH_3)_3SiN(C_2H_5)_2$, $(CH_3)_2(C_2H_5)SiN(C_2H_5)_2$, $(CH_3)(C_2H_5)_2SiN(C_2H_5)_2$, $H_3SiNH(CH_3)$, $H_2CH_3SiNH(CH_3)$, $H_2C_2H_5SiNH(CH_3)$, $H(CH_3)_2SiNH(CH_3)$, $H(C_2H_5)_2SiNH(CH_3)$, $(CH_3)_3SiNH(CH_3)$, $(CH_3)_2(C_2H_5)SiNH(CH_3)$, $(CH_3)(C_2H_5)_2SiNH(CH_3)$, $H_3SiNH(C_2H_5)$, $H_2CH_3SiNH(C_2H_5)$, $H_2C_2H_5SiNH(C_2H_5)$, $H(CH_3)_2SiNH(C_2H_5)$, $H(C_2H_5)_2SiNH(C_2H_5)$, $(CH_3)_3SiNH(C_2H_5)$, $(CH_3)_2(C_2H_5)SiNH(C_2H_5)$, $(CH_3)(C_2H_5)_2SiNH(C_2H_5)$, $Si\{N(CH_3)_2\}_3Cl$, $Si\{N(C_2H_5)_2\}_3Cl$, $HSi\{N(CH_3)_2\}_2Cl$, $HSi\{N(C_2H_5)_2\}_2Cl$, $CH_3si\{N(CH_3)_2\}_2Cl$, $CH_3Si\{N(C_2H_5)_2\}_2Cl$, $C_2H_5Si\{N(CH_3)_2\}_2Cl$, $C_2H_5Si\{N(C_2H_5)_2\}_2Cl$, $C_3H_7Si\{N(CH_3)_2\}_2Cl$, $C_3H_7Si\{N(C_2H_5)_2\}_2Cl$, $C_4H_9Si\{N(CH_3)_2\}_2Cl$, $C_4H_9Si\{N(C_2H_5)_2\}_2Cl$, $C_6H_5Si\{N(CH_3)_2\}_2Cl$, $C_6H_5Si\{N(C_2H_5)_2\}_2Cl$, $C_2H_4Si\{N(CH_3)_2\}_2Cl$, $C_2H_4Si\{N(C_2H_5)_2\}_2Cl$, $Si\{NH(CH_3)\}_3Cl$, $Si\{NH(C_2H_5)\}_3Cl$, $HSi\{NH(CH_3)\}_2Cl$, $HSi\{NH(C_2H_5)\}_2Cl$, $CH_3Si\{NH(CH_3)\}_2Cl$, $CH_3Si\{NH(C_2H_5)\}_2Cl$, $C_2H_5Si\{NH(CH_3)\}_2Cl$, $C_2H_5Si\{NH(C_2H_5)\}_2Cl$, $C_3H_7Si\{NH(CH_3)\}_2Cl$, $C_3H_7Si\{NH(C_2H_5)\}_2Cl$, $C_4H_9Si\{NH(CH_3)\}_2Cl$, $C_4H_9Si\{NH(C_2H_5)\}_2Cl$, $C_6H_5Si\{NH(CH_3)\}_2Cl$, $C_6H_5Si\{NH(C_2H_5)\}_2Cl$, $C_2H_4Si\{NH(CH_3)\}_2Cl$, $C_2H_4Si\{NH(C_2H_5)\}_2Cl$, and the like.

Silicon compounds having a cyclic amino group may also be used. Examples are

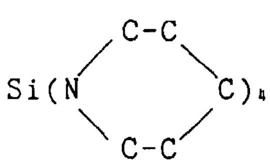

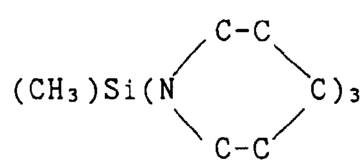

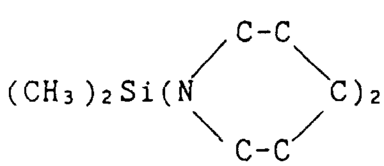

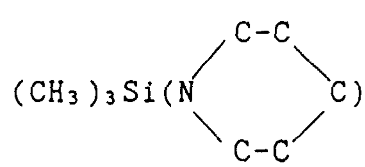

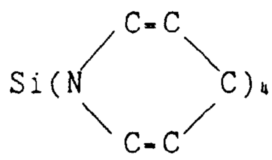

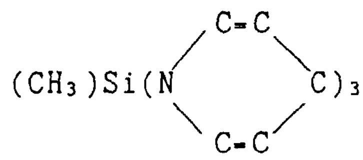

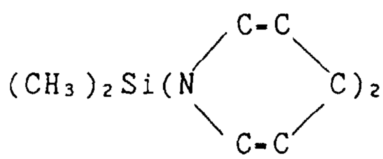

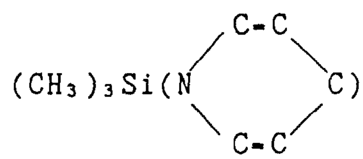

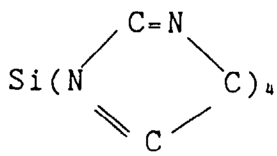

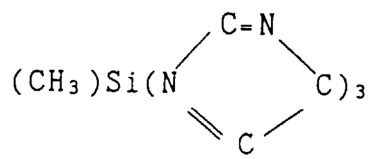

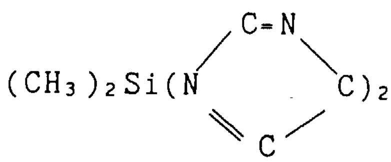

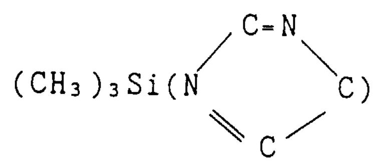

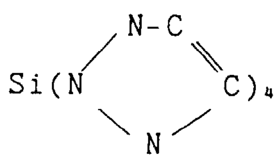

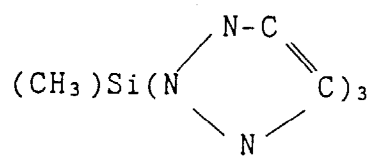

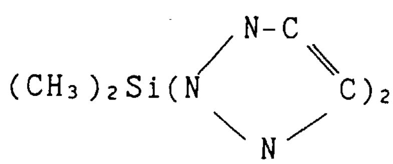

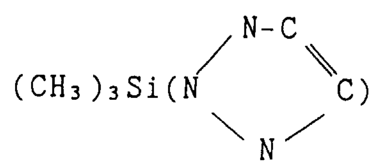

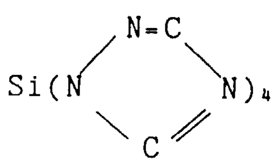

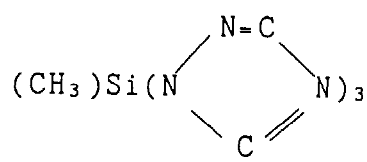

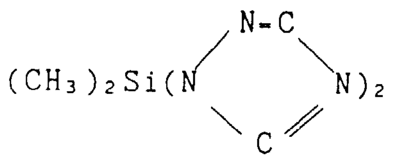 and 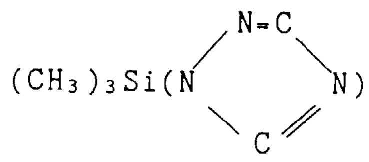 .

Preferable compounds are $Si(OCH_3)_4$, $Si(OC_2H_5)_4$, $(CH_3)_2Si(OCH_3)_2$, $(C_2H_5)_2Si(OC_2H_5)_2$, $(CH_3)_2$ $Si(OC_2H_5)_2$, $(C_2H_5)_2Si(OCH_3)_2$, $(CH_3)HSi(OCH_3)_2$, $(C_2H_5)HSi(OCH_3)_2$, $(CH_3)HSi(OC_2H_5)_2$, $(C_2H_5)HSi(OCH_3)_2$, $HSi(OCH_3)_3$, $HSi(OC_2H_5)_3$, $HCH_3Si$ $\{N(CH_3)_2\}_2$, $HCH_3Si$ $\{N(C_2H_5)_2\}_2$, $(CH_3)_2Si$ $\{N(CH_3)_2\}_2$ and $(CH_3)_2Si$ $\{N(C_2H_5)_2\}_2$.

The amount of the silicon compound (compound [II]) is usually in the range of 0.01 to 100, preferably 0.1 to 10, more preferably 0.5 to 5, in terms of component [II]/ {component [I]-(3) in component [I]} (molar ratio).

3. Organometallic Compound (Component [III])

The catalyst used in the present invention comprises the above mentioned solid catalyst component, the above mentioned silicon compound and an organometallic compound.

As the organometallic compound used in the present invention, there may be preferably employed an organometallic compound of a metal of Groups I-IV in the Periodic Table which is known as a component of Ziegler type catalyst. Particularly preferred are organoaluminum compounds and organozinc compounds. To illustrate these compounds, mention may be made of organoaluminum compounds of the general formulae $R_3Al$, $R_2AlX$, $RAlX_2$, $R_2AlOR$, $RAl(OR)X$ and $R_3Al_2X_3$ wherein R, which may be the same or different, is an alkyl or aryl group having 1 to 20 carbon atoms and X is a halogen atom, as well as organozinc compounds of the general formula $R_2Zn$ wherein R, which may be the same or different, is an alkyl group having 1 to 20 carbon atoms. Concrete examples are trimethylaluminum, triethylaluminum, triisopropylaluminum, triisobutylaluminum, tri-sec-butylaluminum, tri-tert-butylaluminum, trihexylaluminum, trioctylaluminum, diethylaluminum chloride, diisopropylaluminum chloride, diethylaluminum ethoxide, ethylaluminum sesquichloride, diethylzinc, and mixtures thereof.

The amount of the organometallic compound (component [III]) used is not specially limited. But usually it is in the range of 0.1 to 1,000, preferably 1-500, moles in terms of component [III]/ {component [I]-(3) in component [I]} (molar ratio).

How to introduce the above mentioned solid catalyst component [I], the above mentioned silicon compound [II] and the above mentioned organometallic compound [II] into a polymerization reactor is not specially limited. Preferably, component [I], [II] and [III] are introduced individually or a mixture of components [II] and [III] and component [I] are introduced individually.

It is also preferable in the present invention that the organometallic compound component be used as a mixture or addition compound of the organometallic compound and an organic acid ester.

Where the organometallic compound component is used as a mixture of the organometallic compound and an organic acid ester, the organic acid ester is used usually in an amount of 0.1 to 1 mole, preferably 0.2 to 0.5 mole, per mole of the organometallic compound. Where it is used as an addition compound of the organometallic compound and the organic acid ester, the molar ratio is preferably in the range of 2 : 1 to 1 : 2.

The organic acid ester is the ester of a saturated or unsaturated, mono- or dibasic organic carboxylic acid having 1 to 24 carbon atoms and an alcohol having 1 to 30 carbon atoms. Examples are methyl formate, ethyl acetate, amyl acetate, phenyl acetate, octyl acetate, methyl methacrylate, ethyl stearate, methyl benzoate, ethyl benzoate, n-propyl benzoate, iso-propyl benzoate, butyl benzoate, hexyl benzoate, cyclopentyl benzoate, cyclohexyl benzoate, phenyl benzoate, benzoic acid-4-tolyl, methyl salicylate, ethyl salicylate, methyl p-hydroxybenzoate, ethyl p-hydroxybenzoate, phenyl salicylate, cyclohexyl p-hydroxybenzoate, benzyl salicylate, ethyl $\alpha$ -resorcinol carboxylate methyl anisate, methyl p-ethoxybenzoate, methyl p-toluylate, ethyl p-toluylate, phenyl p-toluylate, ethyl o-toluylate, ethyl m-toluylate, methyl p-aminobenzoate, ethyl p-aminobenzoate, vinyl benzoate, allyl benzoate, benzyl benozoate, methyl naphthoate, and ethyl naphthoate. Particularly preferred are alkyl esters, especially methyl esters, of benzoic acid, o- or p-toluic acid and anisic acid.

4. Polymerization of Olefin

The olefin polymerization using the catalyst of the present invention can be performed in the form of slurry polymerization, solution polymerization or vapor phase polymerization. The catalyst used in the present invention is particularly suitable for vapor phase polymerization. The polymerization reaction is carried out in the same way as in the conventional olefin polymerization reaction using a Ziegler type catalyst. More particularly, the reaction is performed

in a substantially oxygen- and water-free condition in the presence or absence of an inert hydrocarbon. Olefin polymerizing conditions involve temperatures in the range of 20° to 120°C, preferably 50° to 100°C, and pressures in the range of atmospheric pressure to 7.07 MPa (70 kg/cm$^2$), preferably .202 to 6.06 MPa (2 to 60 kg/cm$^2$). Adjustment of the molecular weight can be done to some extent by changing polymerization conditions such as the polymerization temperature and the catalyst mole ratio, but the addition of hydrogen into the polymerization system is more effective for this purpose. Of course, using the catalyst of the present invention, there can be performed two or more multi-stage polymerization reactions involving different polymerization conditions such as different hydrogen concentrations and different polymerization temperatures.

The process of the present invention is applicable to the polymerization of all olefins that can be polymerized using a Ziegler type catalyst, preferably α-olefins having 2 to 12 carbon atoms. For example, it is suitable for the homopolymerization of such α -olefins as ethylene, propylene, 1-butene, 1-hexene and 4-methyl-pentene and the copolymerization of ethylene and an α -olefin having 3-12 carbon atoms such as propylene, 1-butene, 1-hexene and 4-methylpentene-1, the copolymerization of propylene and 1-butene and the copolymerization of ethylene and one or more α-olfeins.

Copolymerization with dienes is also preferable for the modification of polyolefins. Examples of diene compounds which may be used for this purpose are butadiene, 1,4-hexadiene, ethylidene norbornene and dicyclopentadiene. The comonomer content in the copolymerization may be selected optionally. For instance, when ethylene and a α-olefin having 3-12 carbon atoms is copolymerized, the α-olefin content in the copolymer is preferably 0-40 molar %, more preferably 0-30 molar %.

<Examples>

The following examples are given to further illustrate the present invention and for practising the invention, but it is to be understood that the invention is not limited thereto.

[How to Measure Physical Properties of Polymer]

<u>Melting Point</u>

Using a differential scanning calorimeter (DSC) (a product of Seiko Denshi K.K.), a polymer sample weighing 5 mg is once melted at 180°C and then cooled to -40°C, thereafter the temperature is raised at a rate of 10°C/min and the temperature corresponding to an endothermic peak top is regarded as the melting point of the polymer.

<u>Hexane Extraction</u>

A copolymer powder is roll-milled at 180°C and then pressed into a 5 cm x 5 cm x 0.2 mm sheet, thereafter the sheet is extracted in boiling hexane for 5 hours and the percent reduction in weight is regarded as hexane extraction.

<u>n-value</u>

Using a flow tester (CFT-500)(a product of Shimazu Corp.) a sample is extruded from a die having a diameter of 2.0 ± 0.01 mm and a length of 40.0 ± 0.01 mm under verious loads at 170°C and a shear rate grade of shear rate to shear stress is calculated using the following equation:

$$\text{n-value} = \frac{\log(\dot{r}_H/\dot{r}_L)}{\log(\tau_H/\tau_L)} = \frac{\log(Q_H/Q_L)}{\log(P_H/P_L)}$$

wherein

$\dot{r}_h$ : apparent shear rate (sec$^{-1}$) at 150 kgf/cm$^2$
$\dot{r}_L$ : apparent shear rate (sec$^{-1}$) at 20 kgf/cm$^2$
$\tau_H$ : apparent shear stress (dyne/cm$^2$) 150 kgf/cm$^2$
$\tau_L$ : apparent shear stress (dyne/cm$^2$) 20 kgf/cm$^2$
Q : flowing value (ml/sec)
P : load (kg)

Example 1

(a) Preparation of Solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 100 g of dehydrated 2-methyl-1-pentanol, 5.0 g of the reaction product of anhydrous magnesium chloride and triethoxyaluminum prepared above and 10.0 g of tetra ethoxytitanium, and reaction was allowed to take place at 80°C for 1 hour. After cooling to room temperature, 46 g of silica (Fuji-Davison #955) which had been calcined at 400°C for 3 hours was placed in the flask and again reaction was allowed to take place at 80°C for 2 hours, followed by drying under reduced pressure at 120°C for 2 hours to obtain a solid powder. Then, 100 cc of dehydrated hexane and 10.0 g of diethyl-aluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

A stainless steel autoclave equipped with a stirrer was used as a vapor phase polymerization apparatus, and a loop was formed using a blower, a flow control device and a dry type cyclone. The temperature of the autoclave was adjusted by passing warm water through a jacket.

The solid catalyst component prepared above, dimethyldimethoxysilane and triethylaluminum were fed at rates of 250 mg/hr, 0.2 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 kg/cm$^2$ G), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 220,000 g copolymer/g.Ti and thus extremely high.

The ethylene copolymer thus prepared was a round particulate matter having a melt flow rate (MRF) of 1.07 g/10 min. a density of 0.9204 g/cm$^3$, a bulk density of 0.47 g/cm$^3$ and an average particle diameter of 800 μm.

The melting point of this copolymer was 121.3°C, the hexane extraction thereof was 2.0 wt%. and n value was 1.42 and thus the molecular weight distribution was extremely narrow.

Example 2

A solid catalyst component was prepared in the same way as in Example 1 except that 0.18 mmol/hr of diethyldiethoxysilane was used in place of dimethyldimethoxysilane. Using this solid catalyst component, polymerization was performed in the same manner as in Example 1.

As a result, catalytic activity was as high as 200,000g. copolymer/g.Ti and there was obtained a round particulate matter having an MFR of 0.96 g/10 min, a density of 0.9197 g/cm$^3$, a bulk density of 0.47 g/cm$^3$ and an average particle diameter of 720 μm. Further, the melting point of the copolymer was 121.2°C and the hexane extraction thereof was 2.2 wt%, and n value was 1.43 and thus the molecular weight distribution was narrow.

Example 3

A solid catalyst component was prepared in the same way as in Example 1 except that 1.0 mmol/hr of methyldimethoxysilane was used in place of dimethyldimethoxysilane. Using this solid catalyst component, polymerization was performed in the same manner as in Example 1.

As a result, catalytic activity was as high as 230,000g.copolymer/g.Ti and there was obtained a round particulate matter having an MFR of 0.88 g/10 min, a density of 0.9200 g/cm$^3$, a bulk density of 0.45 g/cm$^3$ and an average particle diameter of 790 μm. Further, the melting point of the copolymer was 122.0°C and the hexane extraction thereof was 2.0 wt%, and n value was 1.44 and thus the molecular weight distribution was narrow.

Example 4

(a) Preparation of solid Catalyst Component

10 g of a commercially available, anhydrous magnesium chloride and 4.2 g of triethoxyaluminum were placed

in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser was purfed with nitrogen and then charged with 100 g'of dehydrated 3,5-dimethyl-1-hexanol 5.0 g of the reaction product of anhydrous magnesium chloride and triethoxyaluminum prepared above and 15.0 g of tetra-n-buthoxytitanium were put into the flask and reaction was allowed to take place at 80°C for 1 hour. After cooling to room temperature, 46 g of silica (Fuji-Davison #955) which had been calcined at 400°C for 3 hours was placed in the flask and again reaction was allowed to take place at 80°C for 2 hour, followed by drying under reduced pressure at 120°C for 2 hours to obtain a solid powder. Then, 100 cc of dehydrated hexane and 10.0 g of diethylaluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, tetraethoxysilane, and triethylaluminum were fed at rates of 250 mg/hr, 0.15 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 mPaG (8 $kg/cm^2G$), circulating the gases in the polymerization system using the blower and withdrawing the resulting polymer intermittently. When the interior of the autoclave was checked after a continuous polymerization for 10 hours, there was found no polymer deposited on the innter wall and the stirrer.

Catalytic activity was 190,000g.copolymer/g.Ti and thus extremely high.

The ethylene copolymer thus prepared was a round particulate matter having a melt flow rate (MRF) of 1.11 g/10 min. a density of 0.9212 $g/cm^3$, a bulk density of 0.47 $g/cm^3$ and an average particle diameter of 680 μm.

The melting point of this copolymer was 121.6°C, the hexane extraction thereof was 2.4 wt%. and n value was 1.43 and thus the molecular weight distribution was extremely narrow.

Example 5

A vapor phase polymerization was conducted using the same solid catalyst component prepared in Example 1 excepting that dimethyldimethoxy-silane and triethylaluminum were mixed at a Si/Al(molar ratio) of 0.04 and reacted for 3 hours at 60°C in advance and the reaction product was fed at a rate of 50 mmol/hr as triethylaluminum.

As a result, catalytic activity was as high as 200,000g.copolymer/g.Ti and there was obtained a round particulate matter having an MFR of 0.92 g/10 min, a density of 0.9214 $g/cm^3$, a bulk density of 0.46 $g/cm^3$ and an average particle diameter of 730 μm. Further, the melting point of the copolymer was 122.1°C and the hexane extraction thereof was 2.3 wt%, and n value was 1.43 and thus the molecular weight distribution was narrow.

Example 6

(a) Preparation of solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 140 cc of dehydrated ethanol 17.0 g of dehydrated 2-ethyl-1-hexanol and 12.0 g of tetraethoxytitanium. After stirring at room temperature for 1 hour, 7.5 of the reaction product of anhydrous magnesium chloride and triethoxyaluminum prepared above was put into the flask and reaction was allowed to take place at 80 °C for 1 hour. After cooling to room temperature, 46 g of silica (Fuji-Davison #955) which had been calcined at 400°C for 3 hours was placed in the flask and again reaction was allowed to take place at 80°C for 2 hour, followed by drying under reduced pressure at 120°C for 2 hours to obtain a solid powder. Then, 100 cc of dehydrated hexane and 10.0 g of diethylaluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, dimethyldimethoxysilane, and triethylaluminum were fed at rates of 250 mg/hr, 0.20 mmol/hr and 50 mmol/hr, respectively into the autoclave held at 80 °C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 kg/cm$^2$G), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 200,000g. copolymer/g.Ti and thus extremely high.

The ethylene copolymer thus prepared was a round particulate matter having a melt flow rate (MRF) of 0.82 g/10 min. a density of 0.9203 g/cm$^3$, a bulk density of 0.47 g/cm$^3$ and an average particle diameter of 7140 μ m.

The melting point of this copolymer was 121.3°C, the hexane extraction thereof was 1.9 wt%. and n value was 1.43 and thus the molecular weight distribution was extremely narrow.

Example 7

(a) Preparation of Solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 100 g of dehydrated, denaturated alcohol, 9.0 g of dehydrated 2-ethyl-1-hexanol and 8.0 g of tetra-n-butoxy-titanium, and stirring was made for 1 hour at room temperature and then 4.0 g of the reaction product of anhydrous magnesium chloride and triethoxyaluminum prepared above was charged, and reaction was allowed to take place at 80°C for 1 hour. After cooling to room temperature, 46 g of silica (Fuji-Davison #955) which had been calcined at 400°C for 3 hours was placed in the flask and again reaction was allowed to take place at 80°C for 2 hours, followed by drying under reduced pressure at 120°C for 2 hours to obtain a solid powder. Then, 100 cc of dehydrated hexane and 5.0 g of diethyl-aluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, dimethyldimethoxysilane and triethylaluminum were fed at rates of 250 mg/hr, 0.20 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 kg/cm$^2$G), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 220,000 g copolymer/g.Ti and thus extremely high.

The ethylene copolymer thus prepared was a round particulate matter having an MRF of 0.91 g/10 min. a density of 0.9208 g/cm$^3$, a bulk density of 0.48 g/cm$^3$ and an average particle diameter of 760 μm.

The melting point of this copolymer was 121.4°C, the hexane extraction thereof was 1.9 wt%. and n value was 1.42 and thus the molecular weight distribution was extremely narrow.

Example 8

Continuous polymerization was performed in the same way as in Example 7 excepting that 0.6 mmol/hr of methyldiethoxy-silane was used in place of dimethyldiethoxysilane.

As a result, catalytic activity was as high as 240,000g.copolymer/g.Ti and there was obtained a round particulate matter having an MFR of 1.03 g/10 min, a density of 0.9196 g/cm$^3$, a bulk density of 0.46 g/cm$^3$ and an average particle diameter of 820 μm. Further, the melting point of the copolymer was 122.0°C and the hexane extraction thereof was 2.0 wt% and n value was 1.43 and thus the molecular weight distribution was narrow.

Example 9

Polymerization was performed in the same way as in Example 1 using the solid catalyst component prepared in

Example 7 excepting that dimethyldimethoxysilane and triethylaluminum were mixed in a Si/Al (molar ratio) of 0.04 and reacted at 60°C for 3 hours in advance and it was fed at a rate of 50 mmol/hr as triethylaluminum.

As a result, catalytic activity was as high as 220,000g.copolymer/g.Ti and there was obtained a round particulate matter having an MFR of 1.03 g/10 min, a density of 0.9205 $g/cm^3$, a bulk density of 0.47 $g/cm^3$ and an average particle diameter of 790 µm. Further, the melting point of the copolymer was 121.5°C and the hexane extraction thereof was 2.0 wt%, and n value was 1.42 and thus the molecular weight distribution was narrow.

Example 10

A solid catalyst component was prepared in the same way as in Example 1 except that 3.6 g of triethoxyboron was used in place of triethoxyaluminum. Using this solid catalyst component, polymerization was performed in the same manner as in Example 1.

As a result, catalytic activity was as high as 210,000g.copolymer/g.Ti and there was obtained a round particulate matter having an MFR of 0.94 g/10 min, a density of 0.9199 $g/cm^3$, a bulk density of 0.45 $g/cm^3$ and an average particle diameter of 740 µm. Further, the melting point of the copolymer was 121.6°C and the hexane extraction thereof was 2.9 wt%, and n value was 1.43 and thus the molecular weight distribution was narrow.

Example 11

A solid catalyst component was prepared in the same way as in Example 1 except that 2.9 g of diethoxymagnesium was used in place of triethoxyaluminum. Using this solid catalyst component, polymerization was carried out in the same manner as in Example 1. As a result, catalytic activity was as high as 220,000g.copolymer/g.Ti and there was obtained a round particulate matter having an MFR of 0.86 g/10 min, a density of 0.9206 $g/cm^3$, a bulk density of 0.46 $g/cm^3$ and an average particle diameter of 780 µm. Further, the melting point of the copolymer was 121.9°C, the hexane extraction thereof was 2.5 wt%, and n value was 1.43 and thus the molecular weight distribution was narrow.

Example 12

A solid catalyst component was prepared in the same way as in Example 1 except that 2.5 g of tetraethoxysilane was used in place of triethoxyaluminum. Using this solid catalyst component, polymerization was performed in the same manner as in Example 1. As a result, catalytic activity was as high as 180,000g.copolymer/g.Ti and there was obtained a round particulate matter having an MFR of 1.21 g/10 min, a density of 0.9209 $g/cm^3$, a bulk density of 0.47 $g/cm^3$ and an average particle diameter of 680 µm. Further, the melting point of the copolymer was 121.5°C, the hexane extraction thereof was 2.0 wt%, and n value was 1.42 and thus the molecular weight distribution was narrow.

Example 13

A solid catalyst component was prepared in the same way as in Example 1 except that alumina was used in place of silica. Using this solid catalyst component, polymerization was performed in the same manner as in Example 1. As a result, catalytic activity was as high as 180,000g.copolymer/g.Ti and there was obtained a round particulate matter having an MFR of 0.95 g/10 min, a density of 0.9224 $g/cm^3$, a bulk density of 0.44 $g/cm^3$ and an average particle diameter of 690 µm. Further, the melting point of the copolymer was 122.8°C, the hexane extraction thereof was 2.6 wt%, and n value was 1.45 and thus the molecular weight distribution was narrow.

Example 14

A solid catalyst component was prepared in the same way as in Example 5 except that silica-alumina was used in place of silica. Using this solid catalyst component, polymerization was performed in the same manner as in Example 1. As a result, catalytic activity was as high as 160,000g.copolymer/g.Ti and there was obtained a round particulate matter having an MFR of 1.05 g/10 min, a density of 0.9231 $g/cm^3$, a bulk density of 0.45 $g/cm^3$ and an average particle diameter of 650 µm. Further, the melting point of the copolymer was 122.4°C, the hexane extraction thereof was 2.5 wt%, and n value was 1.45 and thus the molecular weight distribution was narrow.

Comparative Example 1

(a) Preparation of Solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm

(1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 100 g of dehydrated 2-methyl-1-pentanol, 5.0 g of the reaction product of anhydrous magnesium chloride and triethoxyaluminum prepared above and 10.0 g of tetra-n-ethoxytitanium, and reaction was allowed to take place at 80°C for 1 hour. After cooling to room temperature, 46 g of silica (Fuji-Davison #955) which had been calcined at 400°C for 3 hours was placed in the flask and again reaction was allowed to take place at 80°C for 2 hours, followed by drying under reduced pressure at 120°C for 2 hours to obtain a solid powder. Then, 100 cc of dehydrated hexane and 10.0 g of diethyl-aluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

A stainless steel autoclave equipped with a stirrer was used as a vapor phase polymerization apparatus, and a loop was formed using a blower, a flow control device and a dry type cyclone. The temperature of the autoclave was adjusted by passing warm water through a jacket.

The solid catalyst component prepared above, and triethylaluminum were fed at rates of 250 mg/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.25 and also adjusting the hydrogen gas pressure to 15% of the total pressure. Polymerization was performed continuously for 10 hours while maintaining the total pressure at 0.808 MPaG (8 $kg/cm^2G$), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 240,000 g copolymer/g.Ti and thus high.

The ethylene copolymer thus prepared was a round particulate matter having an MRF of 1.02 g/10 min. a density of 0.9205 $g/cm^3$, a bulk density of 0.45 $g/cm^3$ and an average particle diameter of 830 μm.

The melting point of this copolymer was 121.6°C, the hexane extraction thereof was 2.7 wt%. and n value was 1.48.

Example 15

(a) Preparation of Solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser ws purged with nitrogen and then charged with 100 g of dehydrated 2-methyl-1-pentanol, 5.0 g of the reaction product of anhydrous magnesium chloride and triethoxyaluminum prepared above and 10.0 g of tetraethoxytitanium. Afterstirring at room temperature for 1 hour, and reaction was allowed to take place at 80°C for 1 hour. After cooling to room temperature, 46 g of silica (Fuji-Davison #955) which had been calcined at 400°C for 3 hours was placed in the flask and again reaction was allowed to take place at 80°C for 2 hours, followed by drying under reduced pressure at 120°C for 2 hours to obtain a solid powder. Then, 100 cc of dehydrated hexane and 10.6 g of diethyl-aluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

A stainless steel autoclave equipped with a stirrer was used as a vapor phase polymerization apparatus, and a loop was formed using a blower, a flow control device and a dry type cyclone. The temperature of the autoclave was adjusted by passing warm water through a jacket.

The solid catalyst component prepared above bis (dimethylamino) dimethyl-silane and triethylaluminum were fed at rates of 250 mg/hr, 10.2 mmol/hr and 50 mmol/hr, respectively, into the autoclave held at 80 °C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 $kg/cm^2G$), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 230,000 g copolymer/g.Ti and thus extremely high.

The ethylene copolymer thus prepared was a round particulate matter having a melt flow rate (MRF) of 0.82 g/10min. a density of 0.9205 g/cm$^3$, a bulk density of 0.47 g/cm$^3$ and an average particle diameter of 800 μm.

The melting point of this copolymer was 121.0°C, the hexane extraction thereof was 1.8 wt%. and n value was 1.41 and thus the molecular weight distribution was extremely narrow.

Example 16

Vapor phase polymerization was performed in the same way as in Example 1 using the solid catalyst component prepared in Example 1 excepting that 1.0 mmol/hr of bis (dimethylamino) methylsilane was used in place of dimethyldimethoxysilane. When the interior of the autoclave was checked after a continuous polymerization for 48 hours, there was found no polymer deposited on the inner wall and the stirrer and thus long term safety operation can be made.

Catalytic activity was 220,000 g copolymer/g.Ti and thus extremely high.

The ethylene copolymer thus prepared was a round particulate matter having an MRF of 0.95 g/10min. a density of 0.9211 g/cm$^3$, a bulk density of 0.46 g/cm$^3$ and an average particle diameter of 780 μm.

The melting point of this copolymer was 121.6°C, the hexane extraction thereof was 2.2 wt%. and n value was 1.42 and thus the molecular weight distribution was extremely narrow.

Example 17

(a) Preparation of solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 100 g of dehydrated 2-methyl-1-pentanol 5.0 g of the reaction product of anhydrous magnesium chloride and triethoxyaluminum prepared above and 10.0 g diethoxydichlorotitanium were put into the flask and reaction was allowed to take place at 80°C for 1 hour. Then after cooling to room temperature, 46 g of silica (Fuji-Davison #955) which had been calcined at 400°C for 3 hours was charged into the flask and again reaction was allowed to take place at 80°C for 2 hour, followed by drying under reduced pressure at 120°C for 2 hours to obtain a solid powder. Then, 100 cc of dehydrated hexane and 10.0 g of diethylaluminum chloride were added thereto and reaction was allowed to proceed at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, dimethyldimethoxysilane and triethylaluminum were fed at rates of 250 mg/hr, 0.20 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 kg/cm$^2$G), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 210,000 g copolymer/g.Ti and thus extremely high.

The ethylene copolymer thus prepared was a round particulate matter having a melt flow (MRF) of 0.86 g/l0min. a density of 0.9204 g/cm$^3$, a bulk density of 0.46 g/cm$^3$ and an average particle diameter of 750 μm.

The melting point of this copolymer was 121.9°C, the hexane extraction thereof was 2.4 wt%. and n value was 1.43 and thus the molecular weight distribution was extremely narrow.

Example 18

Vapor phase polymerization was performed in the same way as in Example 17 using the solid catalyst component prepared in Example 17 excepting that 1.0 mmol/hr of bis (dimethylamino) dimethylsilane was used in place of dimethyldimethoxysilane. When the interior of the autoclave was checked after a continuous polymerization for 48 hours, there was found no polymer deposited on the inner wall and the stirrer and thus long term safety operation can be made.

Catalytic activity was 240,000 g copolymer/g.Ti and thus extremely high.

The ethylene copolymer thus prepared was a round particulate matter having an MRF of 0.96 g/10min. a density of 0.9201 g/cm$^3$, a bulk density of 0.47 g/cm$^3$ and an average particle diameter of 790 μm.

The melting point of this copolymer was 121.5°C, the hexane extraction thereof was 2.1 wt%. and n value was 1.43 and thus the molecular weight distribution was extremely narrow.

Example 19

(a) Preparation of solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere.

A three-necked flask equipped with a stirrer and a reflux condenser was purged with nitrogen and then charged with 140 cc of dehydrated denatured ethanol, 17.0 g of dehydrated 2-ethyl-1-hexanol and 12.0 g of dibutoxydichlorotitanium. After stirring the at room temperature for 1 hour, 5.0 g of the reaction product of anhydrous magnesium chloride and triethoxyaluminum prepared above was put into put into the flask and reaction was allowed to take place at 80°C for 1 hour. Then after cooling to room temperature, 46 g of silica (Fuji-Davison #955) which had been calcined at 400°C for 3 hours was charged into the flask and again reaction was allowed to proceed at 80 °C for 2 hours, followed by drying under reduced pressure at 120°C for 2 hours to obtain a solid powder. Then, 100 cc of dehydrated hexane and 10.0 g of diethylaluminum chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, methyldimethoxysilane and triethylaluminum were fed at rates of 250 mg/hr, 0.6 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 kg/cm$^2$G), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 210,000 g copolymer/g.Ti and thus extremely high.

The ethylene copolymer thus prepared was a round particulate matter having an MRF of 0.96 g/10min. a density of 0.9198 g/cm$^3$, a bulk density of 0.48 g/cm$^3$ and an average particle diameter of 750 μm.

The melting point of this copolymer was 121.8°C, the hexane extraction thereof was 2.1 wt%. and n value was 1.43 and thus the molecular weight distribution was extremely narrow.

Example 20

Vapor phase polymerization was performed in the same way as in Example 19 using the solid catalyst component prepared in Example 19 excepting that 1.0 mmol/hr of bis (dimethylamino) dimethylsilane in place of methyldimethoxysilane. When the interior of the autoclave was checked after a continuous polymerization for 48 hours, there was found no polymer deposited on the inner wall and the stirrer and thus long term safety operation can be made.

Catalytic activity was 220,000 g copolymer/g.Ti and thus extremely high.

The ethylene copolymer thus prepared was a round particulate matter having an MRF of 0.97 g/l0min. a density of 0.9203 g/cm$^3$, a bulk density of 0.48 g/cm$^3$ and an average particle diameter of 770 μm.

The melting point of this copolymer was 121.8°C, the hexane extraction thereof was 2.2 wt%. and n value was 1.42 and thus the molecular weight distribution was extremely narrow.

Example 21

(a) Preparation of solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 100 g of 2-methyl-1-pentanol and 5.0 g of the reaction product of anhydrous magnesium chloride and triethoxyaluminum prepared above and 10.0 g of tetraethoxytitanium were put into the flask and reaction was allowed to take place at 80 °C for 1 hour. After cooling to room temperature, 46 g of silica (Fuji-Davison #955) which had

been calcined at 400°C for 3 hours was charged into the flask and again reaction was allowed to proceed at 80 °C for 2 hours, followed by drying under reduced pressure at 120°C for 2 hours to obtain a solid powder. Then, 100 cc of dehydrated hexane and 8.0 g of ethylaluminummonoethoxychloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, dimethyldimethoxysilane and triethylaluminum were fed at rates of 250 mg/hr, 0.20 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 $kg/cm^2G$), circulating the gases in the polymerization system using the blower and withdrawing the resulting polymer intermittently. When the interior of the autoclave was checked after a continuous polymerization for 10 hours, there was found no polymer deposited on the inner wall and the stirrer.

Catalytic activity was 190,000 g copolymer/g.Ti and thus extremely high.

The ethylene copolymer thus prepared was a round particulate matter having a melt flow rate (MRF) of 1.32 g/10min. a density of 0.9221 $g/cm^3$, a bulk density of 0.49 $g/cm^3$ and an average particle diameter of 700 µm.

The melting point of this copolymer was 121.2°C, the hexane extraction thereof was 2.0 wt%. and n value was 1.42 and thus the molecular weight distribution was extremely narrow.

Example 22

Vapor phase polymerization was performed in the same way as in Example 21 using the solid catalyst component prepared in Example 21 excepting that 1.0 mmol/hr of bis (dimethylamino) dimethylsilane was used in place of dimethyldimethoxysilane. When the interior of the autoclave was checked after a continuous polymerization for 48 hours, there was found no polymer deposited on the inner wall and the stirrer and thus long term safety operation can be made.

Catalytic activity was 190,000 g copolymer/g.Ti and thus extremely high.

The ethylene copolymer thus prepared was a round particulate matter having an MRF of 1.12 g/10min. a density of 0.9213 $g/cm^3$, a bulk density of 0.46 $g/cm^3$ and an average particle diameter of 720 µm.

The melting point of this copolymer was 122.3°C, the hexane extraction thereof was 2.4 wt%. and n value was 1.44 and thus the molecular weight distribution was extremely narrow.

Example 23

(a) Preparation of solid Catalyst Component

10 g of a commercially available, anhydrous magnesium chloride and 4.2 g of triethoxyaluminum were placed in a stainless steel pot having an internal volume of 400 ml and containing 25 stainless steel balls each 12.7 mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 140 ml of methanol-modified ethanol, 20 g of dehydrated 2-ethyl-1-hexanol and 12.0 g of di-n-butoxydichlorotitanium. After stirring at room temperature for 1 hour, 5.0 g of the reaction product of anhydrous magnesium chloride and triethoxyaluminum prepared above was put into the flask and reaction was allowed to take place at 80°C for 1 hour. After cooling to room temperature, 46 g of silica (Fuji-Davison #955) which had been calcined at 400°C for 3 hours was placed in the flask and again reaction was allowed to take place at 80°C for 2 hours, followed by drying under reduced pressure at 120 °C for 2 hours to obtain a solid powder. Then, 100 cc of dehydrated hexane and 10.0 g of ethylaluminum monoethoxy chloride were added thereto and reaction was allowed to take place at room temperature for 1 hour. Thereafter, the hexane was removed by blowing nitrogen at 60°C for 3 hours to obtain a solid catalyst component.

(b) Vapor Phase Polymerization

Using the same vapor phase polymerization apparatus as in Example 1, the solid catalyst component prepared above, methyldimethoxysilane and triethylaluminum were fed at rates of 250 mg/hr, 0.6 mmol/hr and 50 mmol/hr, respectively, into the autoclave held at 80°C. Also, butene-1, ethylene and hydrogen gases were fed while adjusting the butene-1/ethylene mole ratio in the internal vapor phase of the autoclave to 0.35 and also adjusting the hydrogen gas pressure to 15% of the total pressure. Polymerization was performed continuously for 10 hours while maintaining the total pressure at 0.808 MPaG (8 $kg/cm^2G$), circulating the gases in the polymerization system using the blower and withdrawing the resulting polymer intermittently. When the interior of the autoclave was

checked after a continuous polymerization for 10 hours, there was found no polymer deposited on the inner wall and the stirrer.

Catalytic activity was 180,000 g copolymer/g.Ti and thus extremely high.

The ethylene copolymer thus prepared was a round particulate matter having an MRF of 1.05 g/10min. a density of 0.9220 g/$cm^3$, a bulk density of 0.48 g/$cm^3$ and an average particle diameter of 660 μm.

The melting point of this copolymer was 122.1°C, the hexane extraction thereof was 2.2 wt%. and n value was 1.43 and thus the molecular weight distribution was extremely narrow.

Example 24

Vapor phase polymerization was performed in the same way as in Example 23 using the solid catalyst component prepared in Example 23 excepting that 1.0 mmol/hr of bis (dimethylamino) dimethylsilane was used in place of methyldimethoxysilane. When the interior of the autoclave was checked after a continuous polymerization for 48 hours, there was found no polymer deposited on the inner wall and the stirrer and thus long term safety operation can be made.

Catalytic activity was 230,000 g copolymer/g.Ti and thus extremely high.

The ethylene copolymer thus prepared was a round particulate matter having an MRF of 1.00 g/10min. a density of 0.9200 g/$cm^3$, a bulk density of 0.48 g/$cm^3$ and an average particle diameter of 780 μm.

The melting point of this copolymer was 122.0°C, the hexane extraction thereof was 2.2 wt%. and n value was 1.42 and thus the molecular weight distribution was extremely narrow.

## Claims

**1.** A process for preparing a polyolefin by polymerizing or copolymerizing an olefin or olefins in the presence of a catalyst comprising the following [I] , [II] , and [III] :

[I] a solid catalyst component prepared by reacting the reaction product prepared by reacting the following components (1), (2) and (3) in the presence of a compound represented by the general formula $R^3OH$ wherein $R^3$ represents a hydrocarbon group having 6-20 carbon atoms which may contain a hetero atom such as oxygen, nitrogen, sulfur or chlorine with the following component (4):

(1) a silicon oxide and/or an aluminum oxide;
(2) a reaction product obtained by the reaction of a magnesium halide and a compound represented by the general formula $Me(OR^1)_nX_{z-n}$ wherein Me represents an element of Groups I to IV in the Periodic Table, z represents the valence of the element Me, n is $O < n \leqq z$, X is a halogen atom, and $R^1$ is a hydrocarbon group having 1 to 20 carbon atoms;
(3) a titanium compound represented by the general formula $Ti(OR^2)_mX_{4-m}$ wherein $R^2$ is a hydrocarbon group having 1 to 20 carbon atoms, X is a halogen atom, and m is $0 \leqq m \leqq 4$; and
(4) an organoaluminum compound represented by the general formula $Al(OR^4)_pR^5_qX_{3-(p+q)}$ wherein $R^4$ and $R^5$ are each a hydrocarbon group having 1-24 carbon atoms and may be same or different, X is a halogen atom or hydrogen atom and p and q are $0 \leqq p < 3$, $0 \leqq q < 3$, provided that $0 < p+q < 3$;

[II] a silicon compound having at least one bonding selected from Si-N-C and Si-O-C; and
[III] an organometallic compo.und.

**2.** A process according to Claim 1, wherein Me and $R^1$ in the general formula $Me(OR^1)_nX_{z-n}$ are an element of Groups I to III or IV b in the Periodic Table and alkyl, aryl, or aralkyl having 1-8 carbon atoms, respectively.

**3.** A process according to claim 1 or 2 , wherein $R^3$ in the general formula $R^3OH$ is alkyl, alkenyl, aryl or aralkyl.

**4.** A process according to any one of claims 1 to 3, wherein the ratio of the compound of the general formula Me $(OR^1)_nX_{z-n}$ to the magnesium halide is in the range of 0.01 to 10 in terms of Me/Mg (molar ratio).

**5.** A process according to any one of claims 1 to 4 wherein the solid catalyst component is prepared by contacting components [I] - (2) and [I] - (3) in advance using a compound of the general formula $R^3OH$ and optionally a lower alcohol having 1 to 5 carbon atoms as solvent, followed by contact with component [I] - (1).

**6.** A process according to any one of claims 1 to 5, wherein the ratio of components [I] - (1) and [I] - (2) corresponds

to 0.01 to 20 mmol of Mg in component [I] - (2) per gram of component [I] - (1).

**7.** A process according to any one of claims 1 to 6, wherein the ratio of components [I] - (1) and [I] - (3) corresponds to 0.01-10.0 mmol of component [I] - (3) per gram of component [I] - (1).

**8.** A process according to any one of claims 1 to 7, wherein the amount of the compound of the general formula $R^3OH$ is 0.1 to 50g per gram of component [I] - (2).

**9.** A process according to any one of claims 1 to 8, wherein the ratio of the reaction product of components [I] - (1) to [I] - (3) and component [I] - (4) is such that component [I] - (4)/component [I] - (3) (molar ratio) is 0.01-100.

**10.** A process according to any one of claims 1 to 9, wherein the silicon compound having at least one Si-O-C bonding is a silicon compound represented by the general formula $R^5_aR^6_bR^7_cSi(OR^8)_dX_{4-(a+b+c+d)}$ wherein $R^5$, $R^6$ and $R^7$ are each hydrogen or a hydrocarbon group having 1-20, $R^8$ is a hydrocarbon group having 1-20, X is a halogen atom, a, b, c and d are $0 \leqq a < 4$, $0 \leqq b < 4$, $0 \leqq c < 4$ and $0 < d \leqq 4$, provided that $0 < a+b+c+d \leqq 4$.

**11.** A process according to any one of claims 1 to 9, wherein the silicon compound having at least one Si-N-C bonding is a silicon compound represented by the general formula $R^5_aR^6_bR^7_cSi(NR^8_2)_dX_{4-(a+b+c+d)}$ wherein $R^5$, $R^6$ and $R^7$ are each hydrogen or a hydrocarbon group having 1-20, $R^8$ is a hydrocarbon group having 1-20, X is a halogen atom, a, b, c and d are $0 \leqq a < 4$, $0 \leqq b < 4$, $0 \leqq c < 4$ and $0 < d \leqq 4$, provided that $0 < a+b+c+d \leqq 4$

**12.** A process according to any one of claims 1 to 11, wherein the amount of the silicon compound [II] is in the range of 0.01 to 100 in terms of component [III] / {component [I] - (3) in componennt [I] } (molar ratio).

**13.** A process according to any one of claims 1 to 12, wherein the organometallic compound [III] is an organoaluminum compound.

**14.** A process according to any one of claims 1 to 13, wherein the organometallic compound is used together with an organic acid ester.

**15.** A process according to any one of claims 1 to 14, wherein the polymerization reaction is conducted at a temperature of 20°C to 120°C and a pressure of atmospheric pressure to 7.07 MPa (70kg/cm$^2$).

## Patentansprüche

**1.** Verfahren zur Herstellung eines Polyolefins durch Polymerisation oder Copolymerisation eines oder mehrerer Olefine in Gegenwart eines Katalysators, der die folgenden Komponenten [I], [II] und [III] enthält:

[I] eine feste Katalysatorkomponente, hergestellt durch Reaktion des durch Umsetzung folgender Komponenten (1), (2) und (3) hergestellten Reaktionsprodukts in Gegenwart einer Verbindung der allgemeinen Formel $R^3OH$, in der $R^3$ eine Kohlenwasserstoffgruppe mit 6 bis 20 Kohlenstoffatomen, die ein Heteroatom wie Sauerstoff, Stickstoff, Schwefel oder Chlor enthält, bedeutet, mit der folgenden Komponente (4) :

(1) eines Siliciumoxids und/oder eines Aluminiumoxids;

(2) eines Reaktionsprodukts, das durch die Reaktion eines Magnesiumhalogenids und einer Verbindung der allgemeinen Formel $Me(OR^1)_nX_{z-n}$, in der Me ein Element der Gruppen I bis IV des Periodensystems darstellt, z die Valenz des Elements Me bedeutet, für n gilt : $0 < n \leq z$, X ein Halogenatom ist und $R^1$ eine Kohlenwasserstoffgruppe mit 1 bis 20 Kohlenstoffatomen bedeutet, erhalten wird;

(3) einer Titanverbindung der folgenden allgemeinen Formel $Ti(OR^2)_mX_{4-m}$, in der $R^2$ eine Kohlenwasserstoffgruppe mit 1 bis 20 Kohlenstoffatomen darstellt, X ein Halogenatom bedeutet und für m gilt: $0 \leq m \leq 4$ und

(4) einer Organoaluminiumverbindung der allgemeinen Formel $Al(OR^4)_pR^5_qX_{3-(p+q)}$, in der $R^4$ und $R^5$ jeweils eine Kohlenwasserstoffgruppe mit 1 bis 24 Kohlenstoffatomen bedeuten und gleich oder verschieden sein können, X ein Halogenatom oder Wasserstoffatom bedeutet und für p und q gilt: $0 \leq p < 3$, $0 \leq$

$q < 3$, mit der Maßgabe daß $0 < p + q < 3$ ist;

[II] eine Siliciumverbindung mit mindestens einer aus Si-N-C und Si-O-C ausgewählten Bindung und

[III] eine organometallische Verbindung.

2. Verfahren nach Anspruch 1, bei dem Me und $R^1$ in der allgemeinen Formel $Me(OR^1)_nX_{z-n}$ ein Element der Gruppen I bis III oder IVb im Periodensystem bzw. Alkyl, Aryl oder Aralkyl mit 1 bis 8 Kohlenstoffatomen bedeutet.

3. Verfahren nach Anspruch 1 oder 2, bei dem $R^3$ in der allgemeinen Formel $R^3OH$ Alkyl, Alkenyl, Aryl oder Aralkyl ist.

4. Verfahren nach einem der Ansprüche 1 bis 3, bei dem das Verhältnis der Verbindung der allgemeinen Formel $Me(OR^1)_nX_{z-n}$ zum Magnesiumhalogenid bezogen auf Me/Mg (Molverhältnis) im Bereich von 0,01 bis 10 liegt.

5. Verfahren nach einem der Ansprüche 1 bis 4, bei dem die feste Katalysatorkomponente dadurch hergestellt wird, daß man zuerst die Komponenten [I]-(2) und [I]-(3) unter Verwendung einer Verbindung der allgemeinen Formel $R^3OH$ und wahlweise eines Niedrigalkohols mit 1 bis 5 Kohlenstoffatomen als Lösungsmittel in Kontakt bringt und anschließend mit der Komponente [I]-(1) in Kontakt bringt.

6. Verfahren nach einem der Ansprüche 1 bis 5, bei dem das Verhältnis der Komponenten [I]-(1) und [I]-(2) 0,01 bis 20 mMol Mg in der Komponente [I]-(2) pro Gramm der Komponente [I]-(1) entspricht.

7. Verfahren nach einem der Ansprüche 1 bis 6, bei dem das Verhältnis der Komponenten [I]-(1) und [I]-(3)0,01 bis 10,0 mMol in der Komponente [I]-(3) pro Gramm der Komponente [I]-(1) entspricht.

8. Verfahren nach einem der Ansprüche 1 bis 7, bei dem die Menge der Verbindung der allgemeinen Formel $R^3OH$ 0,1 bis 50 g pro Gramm der Komponente [I]-(2) beträgt.

9. Verfahren nach einem der Ansprüche 1 bis 8, bei dem das Verhältnis des Reaktionsprodukts aus den Komponenten [I]-(1) bis [I]-(3) und der Komponente [I]-(4) so ist, daß das Molverhältnis der Komponente [I]-(4) zur Komponente [I]-(3) 0,01 bis 100 beträgt.

10. Verfahren nach einem der Ansprüche 1 bis 9, bei dem die Siliciumverbindung mit mindestens einer Si-O-C-Bindung eine Siliciumverbindung der allgemeinen Formel $R^5{}_aR^6{}_bR^7{}_cSi(OR^8)_dX_{4-(a+b+c+d)}$ ist, in der $R^5$, $R^6$ und $R^7$ jeweils Wasserstoff oder eine Kohlenwasserstoffgruppe mit 1 bis 20 Kohlenstoffatomen bedeuten, $R^8$ eine Kohlenwasserstoffgruppe mit 1 bis 20 Kohlenstoffatomen bedeutet, X ein Halogenatom ist und für a, b, c und d gilt: $0 \le a < 4$, $0 \le b < 4$, $0 \le c < 4$ und $0 < d \le 4$, mit der Maßgabe, daß $0 < a+b+c+d \le 4$ ist.

11. Verfahren nach einem der Ansprüche 1 bis 9, bei dem die Siliciumverbindung mit mindestens einer Si-N-C-Bindung eine Siliciumverbindung der allgemeinen Formel $R^5{}_aR^6{}_bR^7{}_c\,Si(NR^8{}_2)_dX_{4-(a+b+c+d)}$ ist, in der $R^5$, $R^6$ und $R^7$ jeweils Wasserstoff oder eine Kohlenwasserstoffgruppe mit 1 bis 20 Kohlenstoffatomen bedeuten, $R^8$ eine Kohlenwasserstoffgruppe mit 1 bis 20 Kohlenstoffatomen bedeutet, X ein Halogenatom ist, für a, b, c und d gilt: $0 \le a < 4$, $0 \le b < 4$, $0 \le c < 4$ und $0 < d \le 4$ mit der Maßgabe, daß $0 < a+b+c+d \le 4$ ist.

12. Verfahren nach einem der Ansprüche 1 bis 11, bei dem die Menge der Siliciumverbindung [II] bezogen auf das Molverhältnis der Komponente [III]/{Komponente [I]-3 in der Komponente [I]} im Bereich von 0,01 bis 100 liegt.

13. Verfahren nach einem der Ansprüche 1 bis 12, bei dem die organometallische Verbindung [III] eine Organoaluminiumverbindung ist.

14. Verfahren nach einem der Ansprüche 1 bis 13, bei dem die organometallische Verbindung zusammen mit einem organischen Säureester verwendet wird.

15. Verfahren nach einem der Ansprüche 1 bis 14, bei dem die Polymerisationsreaktion bei einer Temperatur von 20 bis 120°C und einem Druck von atmosphärischem Druck bis 7,07 mPa (70 $kg/cm^2$) durchgeführt wird.

## Revendications

**1.** Procédé pour la préparation d'une polyoléfine par polymérisation ou copolymérisation d'une oléfine ou d'oléfines en présence d'un catalyseur comprenant les composants [I], [II] et [III] suivants :

[I] un composant catalytique solide préparé par réaction du produit réactionnel obtenu par réaction des composants (1), (2) et (3) suivants, en présence d'un composé représenté par la formule générale :

$$R^3OH$$

dans laquelle $R^3$ représente un groupe hydrocarboné ayant 6 à 20 atomes de carbone, qui peut contenir un hétéroatome comme l'oxygène, l'azote, le soufre ou le chlore, avec le composant (4) suivant :

(1) un oxyde de silicium et/ou un oxyde d'aluminium;
(2) un produit réactionnel obtenu par la réaction d'un halogénure de magnésium et d'un composé représenté par la formule générale:

$$Me(OR^1)_nX_{z-n},$$

dans laquelle Me représente un élément des Groupes I à IV du Tableau périodique, z représente la valence de l'élément Me, n est tel que $0 < n \leq z$, X est un atome d'halogène, et $R^1$ est un groupe hydrocarboné ayant 1 à 20 atomes de carbone;
(3) un composé du titane représenté par la formule générale :

$$Ti(OR^2)_mX_{4-m}$$

dans laquelle $R^2$ est un groupe hydrocarboné ayant 1 à 20 atomes de carbone, X est un atome d'halogène, et m est tel que $0 \leq m \leq 4$; et
(4) un composé organoaluminique représenté par la formule générale :

$$Al(OR^4)_pR^5{}_qX_{3-(p+q)}$$

dans laquelle $R^4$ et $R^5$ sont chacun un groupe hydrocarboné ayant 1 à 24 atomes de carbone et peuvent être identiques ou différents, X est un atome d'halogène ou d'hydrogène, et p et q sont tels que $0 \leq p < 3$, $0 \leq q < 3$, à condition que $0 < p+q < 3$;

[II] un composé du silicum ayant au mois une liaison choisie parmi Si-N-C et Si-O-C; et
[III] un composé organométallique.

**2.** Procédé suivant la revendication 1, dans lequel Me et $R^1$ dans la formule générale $Me(OR^1)_nX_{z-n}$, sont un élément des Groupes I à III ou IVb du Tableau périodique et un groupe alkyle, aryle ou aralkyle ayant 1 à 8 atomes de carbone, respectivement.

**3.** Procédé suivant les revendications 1 ou 2, dans lequel $R^3$ dans la formule générale $R^3OH$ est un groupe alkyle, alcényle, aryle ou aralkyle.

**4.** Procédé suivant l'une quelconque des revendications 1 à 3, dans lequel le rapport du composé de formule générale $Me(OR^1)_nX_{z-n}$ à l'halogénure de magnésium est compris dans la gamme de 0,01 à 10 en termes de rapport molaire Me/Mg.

**5.** Procédé suivant l'une quelconque des revendications 1 à 4, dans lequel le composant catalytique solide est préparé par mise en contact préalable des composants [I]-(2) et [I]-(3) avec un composé de formule générale $R^3OH$ et éventuellement un alcool inférieur ayant 1 à 5 atomes de carbone comme solvant, suivie d'une mise en contact avec le composant [I]-(1).

6. Procédé suivant l'une quelconque des revendications 1 à 5, dans lequel le rapport des composants [I]-(1) et [I]-(2) correspond à 0,01 à 20 mmoles de Mg dans le composant [I]-(2) par gramme de composant [I]-(1).

7. Procédé suivant l'une quelconque des revendications 1 à 6, dans lequel le rapport des composants [I]-(1) et [I]-(3) correspond à 0,01 à 10,0 mmoles de composant [I]-(3) par gramme de composant [I]-(1).

8. Procédé suivant l'une quelconque des revendications 1 à 7, dans lequel la quantité du composé de formule générale $R^3OH$ est de 0,1 à 50 g par gramme de composant [I]-(2).

9. Procédé suivant l'une quelconque des revendications 1 à 8, dans lequel le rapport du produit réactionnel des composants [I]-(1) à [I]-(3) et du composant [I]-(4) est tel que le rapport molaire du composant [I]-(4) au composant [I]-(3) est de 0,01 à 100.

10. Procédé suivant l'une quelconque des revendications 1 à 9, dans lequel le composé du silicium ayant au moins une liaison Si-O-C est un composé du silicium représenté par la formule générale :

$$R^5{}_aR^6{}_bR^7{}_cSi(OR^8)_dX_{4-(a+b+c+d)}$$

dans laquelle $R^5$, $R^6$ et $R^7$ sont chacun un atome d'hydrogène ou un groupe hydrocarboné ayant 1 à 20 atomes de carbone, $R^8$ est un groupe hydrocarboné ayant 1 à 20 atomes de carbone, X est un atome d'halogène, a, b, c et d sont tels que $0 \leq a < 4$, $0 \leq b < 4$, $0 \leq c < 4$ et $0 < d \leq 4$, à condition que $0 < a+b+c+d \leq 4$.

11. Procédé suivant l'une quelconque des revendications 1 à 9, dans lequel le composé du silicium ayant au moins une liaison Si-N-C est un composé du silicium représenté par la formule :

$$R^5{}_aR^6{}_bR^7{}_cSi(NR^8{}_2)_dX_{4-(a+b+c+d)}$$

dans laquelle $R^5$, $R^6$ et $R^7$ sont chacun un atome d'hydrogène ou un groupe hydrocarboné ayant 1 à 20 atomes de carbone, $R^8$ est un groupe hydrocarboné ayant 1 à 20 atomes de carbone, X est un atome d'halogène, a, b, c et d sont tels que $0 \leq a < 4$, $0 \leq b < 4$, $0 \leq c < 4$ et $0 < d \leq 4$, à condition que $0 < a+b+c+d \leq 4$.

12. Procédé suivant l'une quelconque des revendications 1 à 11, dans lequel la quantité du composé du silicium [II] est comprise dans la gamme de 0,01 à 100 en termes de rapport molaire du composant [III] au {composant [I]-(3) dans le composant [I]}.

13. Procédé suivant l'une quelconque des revendications 1 à 12, dans lequel le composé organométallique [III] est un composé organoaluminique.

14. Procédé suivant l'une quelconque des revendications 1 à 13, dans lequel le composé organométallique est utilisé avec un ester d'acide organique.

15. Procédé suivant l'une quelconque des revendications 1 à 14, dans lequel la réaction de polymérisation est conduite à une température de 20°C à 120°C et à une pression comprise entre la pression atmosphérique et 7,07 MPa (70 kg/$cm^2$).